# EUROPÄISCHE PATENTSCHRIFT

(11) **EP 2 501 744 B1**
(45) Veröffentlichungstag und Bekanntmachung des Hinweises auf die Patenterteilung: **19.03.2014**
(21) Anmeldenummer: 10776740.2
(22) Anmeldetag: 16.11.2010
(51) Int. Cl.: C08G 18/28, C08G 18/61, C08G 18/73, C08G 18/75, C08G 18/76, C08G 77/26

(54) **SILOXAN-COPOLYMERE ENTHALTENDE ZUSAMMENSETZUNGEN**
COMPOSITIONS COMPRISING SILOXANE COPOLYMERS
COMPOSITIONS CONTENANT DES COPOLYMÈRES DE SILOXANE

(30) Priorität: 18.11.2009 DE 102009046850
(43) Veröffentlichungstag der Anmeldung: 26.09.2012
(73) Patentinhaber: Wacker Chemie AG, 81737 München (DE)
(72) Erfinder: PFEIFFER, Jürgen, 84561 Mehring (DE)
(74) Vertreter: Budczinski, Angelika
(86) Internationale Anmeldenummer: PCT/EP2010/067519
(87) Internationale Veröffentlichungsnummer: WO 2011/061161

(56) Entgegenhaltungen:
- US-A1- 2001 037 008

## Beschreibung

Die Erfindung betrifft Zusammensetzungen enthaltend Siloxan-Copolymere und eigenschaftsverbessernde Zusatzkomponenten, Verfahren zu deren Herstellung und deren Verwendung.

Die Eigenschaften von Polyurethanen und Siliconelastomeren sind in weiten Bereichen komplementär. Polyurethane zeichnen sich durch ihre hervorragende mechanische Festigkeit, Elastizität und eine sehr gute Haftung, Abriebfestigkeit sowie eine einfache Verarbeitung durch Extrusion aus der Schmelze aus. Siliconelastomere dagegen besitzen eine ausgezeichnete Temperatur-, UV- und Bewitterungsstabilität. Dabei behalten sie ihre elastischen Eigenschaften bei tieferen Temperaturen bei und neigen deshalb auch nicht zur Versprödung. Daneben besitzen sie spezielle wasserabweisende und antihaftende Oberflächeneigenschaften.

Durch die Kombination von Urethan- und Silicon-Polymeren werden Materialien mit guten mechanischen Eigenschaften zugänglich, die sich zugleich durch gegenüber den Siliconen stark vereinfachten Verarbeitungsmöglichkeiten auszeichnen, jedoch weiterhin die meisten der positiven Eigenschaften der Silicone besitzen. Die Kombination der Vorteile beider Systeme kann daher zu Verbindungen mit niedrigen Glastemperaturen, geringen Oberflächenenergien, verbesserten thermischen und photochemischen Stabilitäten, geringer Wasseraufnahme und physiologisch inerten Materialien führen.

Durch Herstellung von Polymerblends konnten nur in wenigen speziellen Fällen ausreichende Verträglichkeiten erreicht werden. Erst mit der in I. Yilgör, Polymer, 1984 (25), 1800 und in EP-A-250248 beschriebenen Herstellung von Polydiorganosiloxan-Harnstoff- bzw. Polydiorganosiloxan-Urethanblockcopolymeren wurden die notwendigen Eigenschaften realisiert. Dabei werden als Ausgangsmaterialien für die Siloxan-Harnstoff- und Siloxan-Urethan-Copolymere als Siloxanbausteine aminoalkyl- oder hydroxyalkyl-terminierte Polysiloxane verwendet. Diese bilden die Weichsegmente in den Copolymeren, analog zu den Polyethern in rein organischen Polyurethansystemen. Als Hartsegmente werden gängige Diisocyanate eingesetzt, wobei diese auch noch durch Zusatz von Diaminen oder Diolen, wie z.B. 1,6-Diaminohexan oder 1,4-Butandiol, zur Erreichung höherer Festigkeiten modifiziert werden können. Die Umsetzung der Aminoverbindungen mit Isocyanaten erfolgt dabei spontan und benötigt in aller Regel keinen Katalysator, bei Verwendung von Hydroxyalkylbausteinen ist zusätzlich die Verwendung von z.B. Zinn-basierenden Additionskatalysatoren notwendig, wie sie üblicherweise in der Polyurethanchemie verwendet werden.

Die Silicon- und Isocyanat-Polymerbausteine sind in einem weiten Bereich problemlos mischbar. Durch die starken Wechselwirkungen der Wasserstoffbrücken zwischen den Harnstoffeinheiten besitzen diese Verbindungen einen definierten Erweichungspunkt und es werden thermoplastische Materialien erhalten. Der Einsatz dieser thermoplastischen Materialien ist in vielen Anwendungen denkbar.

Trotz der guten Eigenschaften der bislang bekannten Polydiorganosiloxan-Harnstoff- bzw. Polydiorganosiloxan-Urethanblockcopolymeren besteht weiterhin der Bedarf an Materialien, die zusätzlich durch ein verbessertes mechanisches Eigenschaftsprofil, wie erhöhter Reißdehnung oder Reißfestigkeit, charakterisiert sind.

Gegenstand der Erfindung sind Zusammensetzungen enthaltend
(A) Copolymere der allgemeinen Formel (1) 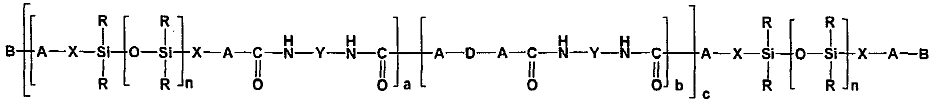 sowie
(B) Verbindung der allgemeinen Formel (2) 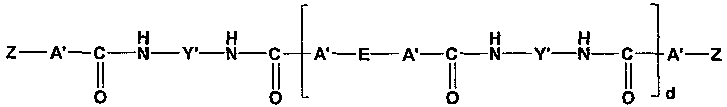 worin
   - **R**: gleich oder verschieden sein kann und Wasserstoffatom oder einen einwertigen, SiC-gebundenen, gegebenenfalls substituierten Kohlenwasserstoffrest bedeutet,
   - **Y**: gleich oder verschieden sein kann und zweiwertige, gegebenenfalls substituierte Kohlenwasserstoffreste darstellt,
   - **X**: gleich oder verschieden sein kann und zweiwertige, SiC-gebundene, gegebenenfalls substituierte Kohlenwasserstoffreste, die durch Sauerstoffatome unterbrochen sein können, darstellt,
   - **A**: gleich oder verschieden sein kann und Sauerstoffatom, Schwefelatom oder Aminogruppe -NR¹- bedeutet,
   - **R¹**: gleich oder verschieden sein kann und Wasserstoffatom oder einen gegebenenfalls substituierten Kohlenwasserstoffrest bedeutet,
   - **D**: gleich oder verschieden sein kann und einen gegebenenfalls durch Halogenatom, C₁-C₆-Alkyl- oder C₁-C₆-Alkylester substituierten Alkylenrest mit 1 bis 700 Kohlenstoffatomen darstellt, in dem einander nicht benachbarte Methyleneinheiten durch Gruppen -O-, -COO-, -OCO- oder -OCOO- ersetzt sein können,
   - **B**: gleich oder verschieden sein kann und Wasserstoffatom, einen Rest OCN-Y-NH-CO-, einen Rest H₂N-Y-NH-CO-, einen R²-A-CO-NH-Y-NH-CO- oder einen Rest R₃Si-(O-SiR₂)ₙ-X-A-CO-NH-Y-NH-CO- darstellt,
   - **R²**: gleich oder verschieden sein kann und einen einwertigen, gegebenenfalls Silyl-substituierten Kohlenwasserstoffrest bedeutet,
   - **A'**: gleich oder verschieden sein kann und eine für A angegebene Bedeutung hat,
   - **Z**: gleich oder verschieden sein kann und einen einwertigen, gegebenenfalls substituierten Kohlenwasserstoffrest oder einen einwertigen siliziumorganischen Rest darstellt,
   - **Y'**: gleich oder verschieden sein kann und eine für Y angegebene Bedeutung hat,
   - **E**: gleich oder verschieden sein kann und einen zweiwertigen, gegebenenfalls substituierten Kohlenwasserstoffrest darstellt,
   - **n**: eine ganze Zahl von 1 bis 4000 ist,
   - **a**: eine ganze Zahl von mindestens 1 ist,
   - **b**: eine ganze Zahl von 0 bis 40 ist,
   - **c**: eine ganze Zahl von mindestens 1 bedeutet und
   - **d**: eine ganze Zahl von 0 bis 5 ist,
mit der Maßgabe, dass in Verbindung der Formel (1) die a Molekülblöcke und b Molekülblöcke im Polymer statistisch verteilt sein können.

Bevorzugt handelt es sich bei Rest R um einwertige, gegebenenfalls mit Halogenatomen, wie Fluor oder Chlor, Aminogruppen, Epoxygruppen, Carboxylgruppen oder Amidgruppen substituierte Kohlenwasserstoffreste mit 1 bis 20 Kohlenstoffatomen, besonders bevorzugt um einwertige Kohlenwasserstoffreste mit 1 bis 6 Kohlenstoffatomen, insbesondere um Methyl-, Ethyl-, Vinyl- und Phenylreste.

Beispiele für Kohlenwasserstoffreste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-und der Naphthylrest; Alkarylreste, wie o-, m-, p-Tolylreste, Xylylreste und Ethylphenylreste; Aralkylreste, wie der Benzylrest, der α- und der β-Phenylethylrest.

Beispiele für substituierte Kohlenwasserstoffreste R sind Aminoalkylreste, wie der 3-Aminopropyl- der 2-Aminoethyl-3-aminopropyl- oder der Phenylaminomethylrest, Epoxyreste, wie der 3-Glycidoxypropylrest, und Carboxylesterreste, wie der 3-Acryloyloxypropyl-, der 3-Methacryloyloxypropyl-, der Acryloyloxymethyl- oder der Methacryloyloxymethylrest.

Beispiele für zweiwertige Kohlenwasserstoffreste Y sind Alkylenreste, wie der Methylen-, Ethylen-, n-Propylen-, iso-Propylen-, n-Butylen-, iso-Butylen-, tert.-Butylen-, n-Pentylen-, iso-Pentylen-, neo-Pentylen-, tert.-Pentylenrest, Hexylenreste, wie der n-Hexylenrest, Heptylenreste, wie der n-Heptylenrest, Octylenreste, wie der n-Octylenrest und iso-Octylenreste, wie der 2,2,4-Trimethylpentylenrest, Nonylenreste, wie der n-Nonylenrest, Decylenreste, wie der n-Decylenrest, Dodecylenreste, wie der n-Dodecylenrest; Cycloalkylenreste, wie Cyclopentylen-, Cyclohexylen-, Cycloheptylenreste, und Methylcyclohexylenreste, wie der Methylen-bis-(4-cyclohexylen)- und der 3-Methylen-3,5,5-trimethylcyclohexylenrest; Arylenreste, wie der Phenylen-und der Naphthylenrest; Alkarylenreste, wie o-, m-, p-Tolylenreste, Xylylenreste, wie der m-Tetramethylxylylenrest, und Ethylphenylenreste; Aralkylenreste, wie der Benzylenrest, der α- und der β-Phenylethylenrest sowie der Methylen-bis-(4-phenylen)-Rest.

Bevorzugt handelt es sich bei Rest Y um gegebenenfalls mit Halogenatome, wie Fluor oder Chlor, substituierte Kohlenwasserstoffreste mit 3 bis 13 Kohlenstoffatomen, besonders bevorzugt um einen Kohlenwasserstoffrest mit 3 bis 13 Kohlenstoffatomen, insbesondere den 1,6-Hexamethylenrest, den 1,4-Cyclohexylenrest, den Methylen-bis-(4-cyclohexylen)rest, den 3-Methylen-3,5,5-trimethylcyclohexylenrest, den Phenylen- und den Naphthylenrest, den m-Tetramethylxylylenrest sowie den Methylen-bis-(4-phenylen)-Rest.

Beispiele für Reste X sind die für Rest Y angegebenen Beispiele sowie gegebenenfalls substituierte Alkylenreste, in denen die Kohlenstoffkette durch Sauerstoffatome unterbrochen sein kann, wie z.B. 2-Oxabutylenrest.

Vorzugsweise handelt es sich bei Rest X um Alkylenreste mit 1 bis 20 Kohlenstoffatomen, die durch Sauerstoffatome unterbrochen sein können, besonders bevorzugt um Alkylenreste mit 1 bis 10 Kohlenstoffatomen, die durch Sauerstoffatome unterbrochen sein können, insbesondere bevorzugt um n-Propylen-, Isobutylen-, 2-Oxabutylen- und Methylenreste.

Vorzugsweise bedeutet A Sauerstoffatom oder eine NR¹-Gruppe mit R¹ gleich der o.g. Bedeutung, besonders bevorzugt bedeutet A Sauerstoffatom oder eine NH-Gruppe, insbesondere eine NH-Gruppe.

Beispiele für Reste R¹ sind die für R oben angegebenen Beispiele.

Bevorzugt handelt es sich bei Rest R¹ um Wasserstoffatom und Alkylreste mit 1 bis 6 Kohlenstoffatomen, besonders bevorzugt um Wasserstoffatom.

Beispiele für Rest D sind Butylen-, Ethylen-, 2-Methylpentylen-und Hexylenrest, sowie -(CH₂)₃-(O-CH(CH₃)-CH₂)₂₋₃₀₀-O-(CH₂)₃-, -CH(CH₃)-CH₂-(O-CH(CH₃)-CH₂)₂₋₃₀₀-, -(CH₂)₃-(O-CH₂-CH₂)₂₋₃₀₀-O-(CH₂)₃- und -CH₂-CH₂-(OCH₂-CH₂)₂₋₃₀₀-.

Bei Rest D handelt es sich bevorzugt um zweiwertige Polyetherreste und Alkylenreste, besonders bevorzugt um zweiwertige Polypropylenglykolreste sowie Alkylenreste mit mindestens 2 und höchstens 20 Kohlenstoffatomen, wie den Ethylen-, den 2-Methylpentylen- und den Butylenrest, insbesondere handelt es sich um Polypropylenglykolreste mit 2 bis 600 Kohlenstoffatomen sowie den Ethylen- und den 2-Methylpentylenrest.

Beispiele für Kohlenwasserstoffreste R² sind die für Reste R angegebenen Beispiele.

Beispiele für silylsubstituierte Kohlenwasserstoffreste R² sind Alkoxysilylpropylreste, wie der 3-Trimethoxysilylpropyl-, der 3-Triethoxysilylpropyl- oder der 3-Triisopropoxysilylpropylrest, Alkoxysilylmethylreste, wie der Trimethoxysilylmethyl-, der Triethoxysilylmethyl- oder der Triisopropoxysilylmethylrest, sowie Trialkoxysilylisobutylreste, wie der 3-Trimethoxysilylisobutyl-, der 3-Triethoxysilylisobutyl- und der 3-Triisopropoxysilylisobutylrest.

Bevorzugt handelt es sich bei Rest R² um einwertige, gegebenenfalls mit Alkoxysilylgruppen substituierte Kohlenwasserstoffreste mit 1 bis 20 Kohlenstoffatomen, besonders bevorzugt um einwertige Kohlenwasserstoffreste mit 1 bis 6 Kohlenstoffatomen sowie den 3-Triethoxysilylpropyl-, den 3-Trimethoxysilylpropyl-, den Trimethoxysilylmethyl- und den Triethoxysilylmethylrest.

Vorzugsweise bedeutet B ein Wasserstoffatom, einen Rest OCN-Y-NH-CO- mit Y gleich n-Hexylen-, 3-Methylen-3,5,5-trimethylcyclohexylen-, m-Tetramethylxylylen-, Methylen-bis-(4-cyclohexylen)-, Methylen-bis(4-phenylen)- oder o-,m- sowie p-Tolylenrest,
nBu-NH-CO-NH-n-(CH₂)₆-NH-CO-,
nBu-NH-CO-NH-(3-Methylen-3,5,5-trimethylcyclohexylen)-NH-CO-,
nBu-NH-CO-NH-m-Tetramethylxylylen-NH-CO-,
nBu-NH-CO-NH-Methylen-bis-(4-cyclohexylen)-NH-CO-,
nBu-NH-CO-NH-Methylen-bis-(4-phenylen)-NH-CO- oder
nBu-NH-CO-NH-Tolylen-NH-CO-,
(EtO)₃Si-(CH₂)₃-NH-CO-NH-n-(CH₂)₆-NH-CO-,
(EtO)₃Si-(CH₂)₃-NH-CO-NH-(3-Methylen-3,5,5-trimethylcyclohexylen)-NH-CO-,
(EtO)₃Si-(CH₂)₃-NH-CO-NH-m-Tetramethylxylylen-NH-CO-,
(EtO)₃Si-(CH₂)₃-NH-CO-NH-Methylen-bis-(4-cyclohexylen)-NH-CO-,
(EtO)₃Si-(CH₂)₃-NH-CO-NH-Methylen-bis-(4-phenylen)-NH-CO-,
(EtO)₃Si-(CH₂)₃-NH-CO-NH-Tolylen-NH-CO-,
(MeO)₃Si-(CH₂)₃-NH-CO-NH-n-(CH₂)₆-NH-CO-,
(MeO)₃Si-(CH₂)₃-NH-CO-NH-(3-Methylen-3,5,5-trimethylcyclohexylen)-NH-CO-,
(MeO)₃Si-(CH₂)₃-NH-CO-NH-m-Tetramethylxylylen-NH-CO-,
(MeO)₃Si-(CH₂)₃-NH-CO-NH-Methylen-bis-(4-cyclohexylen)-NH-CO-,
(MeO)₃Si-(CH₂)₃-NH-CO-NH-Methylen-bis-(4-phenylen)-NH-CO-,
(MeO)₃Si-(CH₂)₃-NH-CO-NH-Tolylen-NH-CO-,
(EtO)₃Si-CH₂-NH-CO-NH-n-(CH₂)₆-NH-CO-,
(EtO)₃Si-CH₂-NH-CO-NH-(3-Methylen-3,5,5-trimethylcyclohexylen)-NH-CO-,
(EtO)₃Si-CH₂-NH-CO-NH-m-Tetramethylxylylen-NH-CO-,
(EtO)₃Si-CH₂-NH-CO-NH-Methylen-bis-(4-cyclohexylen)-NH-CO-,
(EtO)₃Si-CH₂-NH-CO-NH-Methylen-bis-(4-phenylen)-NH-CO-,
(EtO)₃Si-CH₂-NH-CO-NH-Tolylen-NH-CO-,
(MeO)₃Si-CH₂-NH-CO-NH-n-(CH₂)₆-NH-CO-,
(MeO)₃Si-CH₂-NH-CO-NH-(3-Methylen-3,5,5-trimethylcyclohexylen)-NH-CO-,
(MeO)₃Si-CH₂-NH-CO-NH-m-Tetramethylxylylen-NH-CO-,
(MeO)₃Si-CH₂-NH-CO-NH-Methylen-bis-(4-cyclohexylen)-NH-CO-,
(MeO)₃Si-CH₂-NH-CO-NH-Methylen-bis-(4-phenylen)-NH-CO-,
(MeO)₃Si-CH₂-NH-CO-NH-Tolylen-NH-CO-,
Me₃Si-(O-SiR₂)₃₋₅₀-(CH₂)₃-NH-CO-NH-n-(CH₂)₆-NH-CO-,
Me₃Si-(O-SiR₂)₃₋₅₀-(CH₂)₃-NH-CO-NH-(3-Methylen-3,5,5-trimethylcyclohexylen)-NH-CO-,
Me₃Si-(O-SiR₂)₃₋₅₀-(CH₂)₃-NH-CO-NH-m-Tetramethylxylylen-NH-CO-,
Me₃Si-(O-SiR₂)₃₋₅₀-(CH₂)₃-NH-CO-NH-Methylen-bis-(4-cyclohexylen)-NH-CO-,
Me₃Si-(O-SiR₂)₃₋₅₀-(CH₂)₃-CO-NH-Methylen-bis-(4-phenylen)-NH-CO- und
Me₃Si-(O-SiR₂)₃₋₅₀-(CH₂)₃-NH-CO-NH-Tolylen-NH-CO-Rest,
besonders bevorzugt Wasserstoffatom, OCN-m-Tetramethylxylylen-NH-CO-, OCN-Methylen-bis-(4-cyclohexylen)-, nBu-NH-CO-NH-m-Tetramethylxylylen-NH-CO-, nBu-NH-CO-NH-Methylen-bis-(4-cyclohexylen)-NH-CO-, (EtO)₃Si-(CH₂)₃-NH-CO-NH-m-Tetramethylxylylen-NH-CO-, (EtO)₃Si-(CH₂)₃-NH-CO-NH-Methylen-bis-(4-cyclohexylen)-NH-CO-, (MeO)₃Si-(CH₂)₃-NH-CO-NH-m-Tetramethylxylylen-NH-CO-, (MeO)₃Si-(CH₂)₃-NH-CO-NH-Methylen-bis-(4-cyclohexylen)-NH-CO-, Me₃Si-(O-SiR₂)₃₋₅₀-(CH₂)₃-NH-CO-NH-m-Tetramethylxylylen-NH-CO- und Me₃Si-(O-SiR₂)₃₋₅₀-(CH₂)₃-NH-CO-NH-Methylen-bis-(4-cyclohexylen)-NH-CO-Rest, wobei Me gleich Methylrest, Et gleich Ethylrest und Bu gleich Butylrest bedeutet.

Beispiele für Z sind die für R angegebenen Reste und silylsubstituierte Alkylreste, wie z.B. der 3-Triethoxysilylpropyl-, der 3-Trimethoxysilylpropyl-, der 3-Triisopropoxysilylpropyl-, der Trimethoxysilylmethyl-, der Triethoxysilylmethylrest und der Triisopropoxysilylmethylrest, sowie Siloxanyl-substituierte Alkylreste, wie der Me₃Si-(O-SiR₂)₃₋₅₀-(CH₂)₃-Rest und der Me₃Si-(O-SiR₂)₃₋₅₀-CH₂-Rest, sowie Alkoxysiloxanyl-substituierte Alkylreste.

Bevorzugt handelt es sich bei Z um gegebenenfalls mit Alkoxysilylgruppen substituierte Kohlenwasserstoffreste mit 1 bis 12 Kohlenstoffatomen, besonders bevorzugt um Alkylreste mit 2 bis 12 Kohlenstoffatomen, insbesondere um Ethyl-, n-Butyl-, 2-Ethylhexyl- und n-Dodecylrest.

Beispiele für Rest E sind Alkylenreste, wie der Methylen-, Ethylen-, n-Propylen-, iso-Propylen-, n-Butylen-, iso-Butylen-, tert.-Butylen-, n-Pentylen-, iso-Pentylen-, neo-Pentylen-, tert.-Pentylenrest, Hexylenreste, wie der n-Hexylenrest, Heptylenreste, wie der n-Heptylenrest, Octylenreste, wie der n-Octylenrest und iso-Octylenreste, wie der 2,2,4-Trimethylpentylenrest, Nonylenreste, wie der n-Nonylenrest, Decylenreste, wie der n-Decylenrest, Dodecylenreste, wie der n-Dodecylenrest; Alkenylenreste, wie der Vinylen- und der Allylenrest; Cycloalkylenreste, wie Cyclobutylen-, Cyclopentylen-, Cyclohexylen-, Cycloheptylenreste und Methylcyclohexylenreste; Arylenreste, wie der Phenylen- und der Naphthylenrest; Alkarylenreste, wie o-, m-, p-Tolylenreste, Xylylenreste und Ethylphenylenreste; Aralkylenreste, wie der Benzylenrest, der α- und der β-Phenylethylenrest.

Vorzugsweise handelt es sich bei Rest E um einen gegebenenfalls mit Halogenatomen wie Chlor oder Fluor substituierten, zweiwertigen Kohlenwasserstoffrest mit 1 bis 20 Kohlenstoffatomen, besonders bevorzugt um einen Alkylenrest mit mindestens 2 und höchstens 12 Kohlenstoffatomen, insbesondere um den Ethylen-, den n-Propylen-, den n-Butylen- und den 2-Methylpentylenrest.

Beispiele und bevorzugte Bereiche von Y' sind die für Rest Y angegebenen Beispiele und bevorzugte Bereiche.

Beispiele und bevorzugte Bereiche von A' sind die für Rest A angegebenen Beispiele und bevorzugte Bereiche.

n bedeutet vorzugsweise eine Zahl von mindestens 3, insbesondere mindestens 10 und vorzugsweise höchstens 800, insbesondere höchstens 400.

Vorzugsweise bedeutet a eine Zahl von höchstens 100, besonders bevorzugt von 10 bis 60.

Vorzugsweise bedeutet b eine Zahl von höchstens 10, besonders bevorzugt von 0 oder 1, insbesondere 0.

Vorzugsweise bedeutet d eine Zahl von höchstens 3, besonders bevorzugt 0 oder 1, insbesondere 0.

c bedeutet vorzugsweise eine Zahl von höchstens 400, besonders bevorzugt 1 bis 100, insbesondere 1 bis 20.

Beispiele für erfindungsgemäß eingesetzte Copolymere (A) der Formel (1) sind
H-[NH-(CH₂)₃-SiMe₂-(O-SiMe₂)₃₃₋₄₅-(CH₂)₃-NH-CO-NH-m-Tetramethylxylylen-NH-CO-NH-CH₂C(CH₃)H-(CH₂)₃-NH-CO-NH-m-Tetramethylxylylen-NH-CO]₁₀-NH-(CH₂)₃-SiMe₂-(O-SiMe₂)₃₃₋₄₅-(CH₂)₃-NH₂,
H-[NH-(CH₂)₃-SiMe₂-(O-SiMe₂)₃₃₋₄₅-(CH₂)₃-NH-CO-NH-m-Tetramethylxylylen-NH-CO]₂₀₋₃₀-NH-(CH₂)₃-SiMe₂-(O-SiMe₂)₃₃₋₄₅-(CH₂)₃-NH₂,
H-[NH-(CH₂)₃-SiMe₂-(O-SiMe₂)₃₃₋₄₅-(CH₂)₃-NH-CO-NH-Methylen-bis-(4-cyclohexylen)-NH-CO]₂₀₋₃₀-NH-(CH₂)₃-SiMe₂-(O-SiMe₂)₃₃₋₄₅-(CH₂)₃-NH₂,
H-[NH-(CH₂)₃-SiMe₂-(O-SiMe₂)₃₃₋₄₅-(CH₂)₃-NH-CO-NH-(3-Methylen-3,5,5-trimethylcyclohexylen)-NH-CO]₂₀₋₃₀-NH-(CH₂)₃-SiMe₂-(O-SiMe₂)₃₃₋₄₅-(CH₂)₃-NH₂,
H-[NH-(CH₂)₃-SiMe₂-(O-SiMe₂)₃₃₋₄₅-(CH₂)₃-NH-CO-NH-1,6-n-(CH₂)₆-NH-CO-NH-CH₂C(CH₃)H-(CH₂)₃-NH-CO-NH-1,6-n-(CH₂)₆-NH-CO]₁₀-NH-(CH₂)₃-SiMe₂-(O-SiMe₂)₃₃₋₄₅-(CH₂)₃-NH₂,
H-[NH-(CH₂)₃-SiMe₂-(O-SiMe₂)₃₃₋₄₅-(CH₂)₃-NH-CO-NH-Methylen-bis-(4-cyclohexylen)-NH-CO-NH-CH₂C(CH₃)H-(CH₂)₃-NH-CO-NH-Methylen-bis-(4-cyclohexylen)-NH-CO]₁₀-NH-(CH₂)₃-SiMe₂-(O-SiMe₂)₃₃₋₄₅-(CH₂)₃-NH₂,
H₄C₉-NH-CO-NH-Methylen-bis(4-cyclohexylen)-NH-CO-[NH-(CH₂)₃-SiMe₂-(O-SiMe₂)₃₃₋₄₅-(CH₂)₃-NH-CO-NH-Methylen-bis-(4-cyclohexylen)-NH-CO]₁₀-NH-(CH₂)₃-SiMe₂-(O-SiMe₂)₃₃₋₄₅-(CH₂)₃-NH-CO-NH-Methylen-bis-(4-cyclohexylen)-NH-CO-NH-C₄H₉, H₄C₉-NH-CO-NH-(3-Methylen-3,5,5-trimethylcyclohexylen)-NH-CO-[NH-(CH₂)₃-SiMe₂-(O-SiMe₂)₃₃₋₄₅-(CH₂)₃-NH-CO-NH-(3-Methylen-3,5,5-trimethylcyclohexylen)-NH-CO-NH-(CH₂)₃-SiMe₂-(O-SiMe₂)₃₃₄₅-(CH₂)₃-NH-CO-NH-(3-Methylen-3,5,5-trimethylcyclohexylen)-NH-CO-NH-C₄H₉,
H₄C₉-NH-CO-NH-m-Tetramethylxylylen-NH-CO-[NH-(CH₂)₃-SiMe₂-(O-SiMe₂)₃₃₋₄₅-(CH₂)₃-NH-CO-NH-m-Tetramethylxylylen-NH-CO]₁₀-NH-(CH₂)₃-SiMe₂-(O-SiMe₂)₃₃₋₄₅-(CH₂)₃-NH-CO-NH-m-Tetramethylxylylen-NH-CO-NH-C₄H₉,
Me₃Si-(O-SiMe₂)₁₅-(CH₂)₃-NH-CO-NH-Methylen-bis-(4-cyclohexylen)-NH-CO-[NH-(CH₂)₃-SiMe₂-(O-SiMe₂)₃₃₋₄₅(CH₂)₃-NH-CO-NH-Methylen-bis-(4-cyclohexylen)-NH-CO]₁₀-NH-(CH₂)₃-SiMe₂-(O-SiMe₂)₃₃₋₄₅-(CH₂)₃-NH-CO-NH-Methylen-bis-(4-cyclohexylen)-NH-CO-NH-(CH₂)₃-(SiMe₂-O)₁₅-SiMe₃,
Me₃Si-(O-SiMe₂)₁₅-(CH₂)₃-NH-CO-NH-(3-Methylen-3,5,5-trimethylcyclohexylen)-NH-CO-[NH-(CH₂)₃-SiMe₂-(O-SiMe₂)₃₃₋₄₅-(CH₂)₃-NH-CO-NH-(3-Methylen-3,5,5-trimethylcyclohexylen)-NH-CO]₁₀-NH-(CH₂)₃-SiMe₂-(O-SiMe₂)₃₃₋₄₅-(CH₂)₃-NH-CO-NH-(3-Methylen-3,5,5-trimethylcyclohexylen)-NH-CO-NH-(CH₂)₃-(SiMe₂-O)₁₅-SiMe₃,
Me₃Si-(O-SiMe₂)₁₅-(CH₂)₃-NH-CO-NH-m-Tetramethylxylylen-NH-CO-[NH-(CH₂)₃-SiMe₂-(O-SiMe₂)₃₃₋₄₅-(CH₂)₃-NH-CO-NH-m-Tetramethylxylylen-NH-CO]₁₀-NH-(CH₂)₃-SiMe₂-(O-SiMe₂)₃₃₋₄₅-(CH₂)₃-NH-CO-NH-m-Tetramethylxylylen-NH-CONH-(CH₂)₃-(SiMe₂-O)₁₅-SiMe₃,
(EtO)₃Si-(CH₂)₃-NH-CO-NH-Methylen-bis-(4-cyclohexylen)-NH-CO-[NH-(CH₂)₃-SiMe₂-(O-SiMe₂)₃₃₋₄₅(CH₂)₃-NH-CO-NH-Methylen-bis-(4-cyclohexylen)-NH-Co]₁₀-NH-(CH₂)₃-SiMe₂-(O-SiMe₂)₃₃₋₄₅(CH₂)₃-NH-CO-NH-Methylen-bis-(4-cyclohexylen)-NH-CO-NH-(CH₂)₃-Si(OEt)₃, (EtO)₃Si-(CH₂)₃-NH-CO-NH-(3-Methylen-3,5,5-trimethylcyclohexylen)-NH-CO-[NH-(CH₂)₃-SiMe₂-(O-SiMe₂)₃₃₋₄₅-(CH₂)₃-NH-CO-NH-(3-Methylen-3,5,5-trimethylcyclohexylen)-NH-CO]₁₀-NH-(CH₂)₃-SiMe₂-(O-SiMe₂)₃₃₋₄₅-(CH₂)₃-NH-CO-NH-(3-Methylen-3,5,5-trimethylcyclohexylen)-NH-CO-NH-(CH₂)₃-Si(OEt)₃, und
(EtO)₃Si-(CH₂)₃-NH-CO-NH-m-Tetramethylxylylen-NH-CO-[NH-(CH₂)₃-SiMe₂-(O-SiMe₂)₃₃₋₄₅-(CH₂)₃-NH-CO-NH-m-Tetramethylxylylen-NH-CO]₁₀-NH-(CH₂)₃-SiMe₂-(O-SiMe₂)₃₃₋₄₅-(CH₂)₃-NH-CO-NH-m-Tetramethylxylylen-NH-CO-NH-(CH₂)₃-Si(OEt)₃, wobei Me Methylrest und Et Ethylrest bedeutet.

Bevorzugt handelt es sich bei der erfindungsgemäß eingesetzten Komponente (A) um
H₄C₉-NH-CO-NH-(3-Methylen-3,5,5-trimethylcyclohexylen)-NH-CO-[NH-(CH₂)₃-SiMe₂-(O-SiMe₂)₃₃₋₄₅-(CH₂)₃-NH-CO-NH-(3-Methylen-3,5,5-trimethylcyclohexylen)-NH-CO-NH-(CH₂)₃-SiMe₂-(O-SiMe₂)₃₃₄₅-(CH₂)₃-NH-CO-NH-(3-Methylen-3,5,5-trimethylcyclohexylen)-NH-CO-NH-C₄H₉,
H-[NH-(CH₂)₃-SiMe₂-(O-SiMe₂)₃₃₋₄₅-(CH₂)₃-NH-CO-NH-Methylen-bis-(4-cyclohexylen)-NH-CO]₂₀₋₃₀-NH-(CH₂)₃-SiMe₂-(O-SiMe₂)₃₃₋₄₅-(CH₂)₃-NH₂,
H₄C₉-NH-CO-NH-Methylen-bis(4-cyclohexylen)-NH-CO-[NH-(CH₂)₃-SiMe₂-(O-SiMe₂)₃₃₋₄₅-(CH₂)₃-NH-CO-NH-Methylen-bis-(4-cyclohexylen)-NH-CO]₁₀-NH-(CH₂)₃-SiMe₂-(O-SiMe₂)₃₃₋₄₅-(CH₂)₃-NH-CO-NH-Methylen-bis-(4-cyclohexylen)-NH-CO-NH-C₄H₉ und H-[NH-(CH₂)₃-SiMe₂-(O-SiMe₂)₃₃₋₄₅-(CH₂)₃-NH-CO-NH-m-Tetramethylxylylen-NH-CO]₂₀₋₃₀-NH-(CH₂)₃-SiMe₂-(O-SiMe₂)₃₃₋₄₅-(CH₂)₃-NH₂,
besonders bevorzugt um
H₄C₉-NH-CO-NH-(3-Methylen-3,5,5-trimethylcyclohexylen)-NH-CO-[NH-(CH₂)₃-SiMe₂-(O-SiMe₂)₃₃₋₄₅-(CH₂)₃-NH-CO-NH-(3-Methylen-3,5,5-trimethylcyclohexylen)-NH-CO-NH-(CH₂)₃-SiMe₂-(O-SiMe₂)₃₃₄₅-(CH₂)₃-NH-CO-NH-(3-Methylen-3,5,5-trimethylcyclohexylen)-NH-CO-NH-C₄H₉,
H₄C₉-NH-CO-NH-Methylen-bis(4-cyclohexylen)-NH-CO-[NH-(CH₂)₃-SiMe₂-(O-SiMe₂)₃₃₋₄₅-(CH₂)₃-NH-CO-NH-Methylen-bis-(4-cyclohexylen)-NH-CO]₁₀-NH-(CH₂)₃-SiMe₂-(O-SiMe₂)₃₃₋₄₅-(CH₂)₃-NH-CO-NH-Methylen-bis-(4-cyclohexylen)-NH-CO-NH-C₄H₉ und H-[NH-(CH₂)₃-SiMe₂-(O-SiMe₂)₃₃₋₄₅-(CH₂)₃-NH-CO-NH-m-Tetramethylxylylen-NH-CO]₂₀₋₃₀-NH-(CH₂)₃-SiMe₂-(O-SiMe₂)₃₃₋₄₅-(CH₂)₃-NH₂, wobei Me Methylrest und Et Ethylrest bedeutet.

Die erfindungsgemäß eingesetzten Copolymere der Formel (1) sind bei Raumtemperatur und dem Druck der umgebenden Atmosphäre, also etwa 900 bis 1100 hPa, bevorzugt gummielastische Festkörper mit Zugfestigkeiten zwischen vorzugsweise etwa 0,5 und 20 MPa sowie Reißdehnungen zwischen bevorzugt etwa 50 bis 1000%. Sie erweichen bei einem Druck von 900 bis 1100 hPa bei Temperaturen zwischen bevorzugt 60 und 200°C und verlieren dabei allmählich ihre gummielastischen Eigenschaften.

Die erfindungsgemäß eingesetzten Copolymere der Formel (1) haben ein Molekulargewicht von bevorzugt 30 000 bis 400 000, besonders bevorzugt 50 000 bis 200 000, insbesondere 60 000 bis 140 000, jeweils gemessen als Gelpermeationschromatogramme gegen Polystyrolstandards.

Bei der erfindungsgemäß eingesetzten Komponente (A) handelt es sich um handelsübliche Produkte bzw. können diese analog beliebiger Verfahren, die dem Fachmann bereits bekannt sind und beispielsweise zur Synthese von (Prä)polymeren für Polyurethane oder thermoplastische Siliconelastomere eingesetzt werden, hergestellt werden. Hierzu sei beispielsweise auf die EP 1 412 416 verwiesen, die zum Offenbarungsgehalt der vorliegenden Erfindung zu zählen ist.

Beispiele für erfindungsgemäß eingesetzte Komponente (B) sind
Me-NH-CO-NH-1,6-n-(CH₂)₆-NH-CO-NH-Me,
Me-NH-CO-NH-m-Tetramethylxylylen-NH-CO-NH-Me,
Me-NH-CO-NH-(3-Methylen-3,5,5-trimethylcyclohexylen)-NH-CO-NH-Me,
Me-NH-CO-NH-Methylen-bis-(4-cyclohexylen)-NH-CO-NH-Me,
Me-NH-CO-NH-Methylen-bis-(4-phenylen)-NH-CO-NH-Me,
Bu-NH-CO-NH-1,6-n-(CH₂)₆-NH-CO-NH-Bu,
Bu-NH-CO-NH-m-Tetramethylxylylen-NH-CO-NH-Bu,
Bu-NH-CO-NH-(3-Methylen-3,5,5-trimethylcyclohexylen)-NH-CO-NH-Bu,
Bu-NH-CO-NH-Methylen-bis-(4-cyclohexylen)-NH-CO-NH-Bu,
Bu-NH-CO-NH-Methylen-bis-(4-phenylen)-NH-CO-NH-Bu,
Et-O-CO-NH-1,6-n-(CH₂)₆-NH-CO-OEt,
Et-O-CO-NH-m-Tetramethylxylylen-NH-CO-O-Et,
Et-O-CO-NH-(3-Methylen-3,5,5-trimethylcyclohexylen)-NH-CO-O-Et,
Et-O-CO-NH-Methylen-bis-(4-cyclohexylen)-NH-CO-O-Et,
Et-O-CO-NH-Methylen-bis-(4-phenylen)-NH-CO-O-Et,
H₃C-(CH₂)₃-CH(C₂H₅)-CH₂-NH-CO-NH-1,6-n-(CH₂)₆-NH-CO-NH-CH₂-CH(C₂H₅)-(CH₂)₃-CH₃,
H₃C-(CH₂)₃-CH(C₂H₅)-CH₂-NH-CO-NH-m-Tetramethylxylylen-NH-CO-N-CH₂-CH(C₂H₅)-(CH₂)₃-CH₃,
H₃C-(CH₂)₃-CH(C₂H₅)-CH₂-NH-CO-NH-(3-Methylen-3,5,5-trimethylcyclohexylen)-NH-CO-NH-CH₂-CH(C₂H₅)-(CH₂)₃-CH₃,
H₃C-(CH₂)₃-CH(C₂H₅)-CH₂-NH-CO-NH-Methylen-bis-(4-cyclohexylen)-NH-CO-NH-CH₂-CH(C₂H₅)-(CH₂)₃-CH₃,
H₃C-(CH₂)₃-CH(C₂H₅)-CH₂-NH-CO-NH-Methylen-bis-(4-phenylen)-NH-CO-NH-CH₂-CH(C₂H₅)-(CH₂)₃-CH₃,
(EtO)₃Si-(CH₂)₃-NH-CO-NH-1,6-n-(CH₂)₆-NH-CO-NH-(CH₂)₃-Si(OEt)₃,
(EtO)₃Si-(CH₂)₃-NH-CO-NH-m-Tetramethylxylylen-NH-CO-NH-(CH₂)₃-Si(OEt)₃,
(EtO)₃Si-(CH₂)₃-NH-CO-NH-(3-Methylen-3,5,5-trimethylcyclohexylen)-NH-CO-NH-(CH₂)₃-Si(OEt)₃,
(EtO)₃Si-(CH₂)₃-NH-CO-NH-Methylen-bis-(4-cyclohexylen)-NH-CO-NH-(CH₂)₃-Si(OEt)₃,
(EtO)₃Si-(CH₂)₃-NH-CO-NH-Methylen-bis-(4-phenylen)-NH-CO-NH-(CH₂)₃-Si(OEt)₃,
(EtO)₃Si-CH₂-N(cy-Hex)-CO-NH-1,6-n-(CH₂)₆-NH-CO-N(cy-Hex)-CH₂-Si(OEt)₃,
(EtO)₃Si-CH₂-N(cy-Hex)-CO-NH-m-Tetramethylxylylen-NH-CO-N(cy-Hex)-CH₂-Si(OEt)₃,
(EtO)₃Si-CH₂-N(cy-Hex)-CO-NH-(3-Methylen-3,5,5-trimethylcyclohexylen)-NH-CO-N(cy-Hex)-CH₂-Si(OEt)₃,
(EtO)₃Si-CH₂-N(cy-Hex)-CO-NH-Methylen-bis-(4-cyclohexylen)-NH-CO-N(cy-Hex)-CH₂-Si(OEt)₃,
(EtO)₃Si-CH₂-N(cy-Hex)-CO-NH-Methylen-bis-(4-phenylen)-NH-CO-N(cy-Hex)-CH₂-Si(OEt)₃,
Me₃Si-(O-SiMe₂)₁₅-(CH₂)₃-NH-CO-NH-1,6-n-(CH₂)₆-NH-CO-NH-(CH₂)₃-(SiMe₂-O)₁₅-SiMe₃,
Me₃Si-(O-SiMe₂)₁₅-(CH₂)₃-NH-CO-NH-m-Tetramethylxylylen-NH-CO-NH-(CH₂)₃-(SiMe₂-O)₁₅-SiMe₃,
Me₃Si-(O-SiMe₂)₁₅-(CH₂)₃-NH-CO-NH-(3-Methylen-3,5,5-trimethylcyclohexylen)-NH-CO-NH-(CH₂)₃-(SiMe₂-O)₁₅-SiMe₃,
Me₃Si-(O-SiMe₂)₁₅-(CH₂)₃-NH-CO-NH-Methylen-bis-(4-cyclohexylen)-NH-CO-NH-(CH₂)₃-(SiMe₂-O)₁₅-SiMe₃ und
Me₃Si-(O-SiMe₂)₁₅-(CH₂)₃-NH-CO-NH-Methylen-bis-(4-phenylen)-NH-CO-NH-(CH₂)₃-(SiMe₂-O)₁₅-SiMe₃, wobei Me Methylrest, Et Ethylrest und Bu Butylrest bedeutet.

Bevorzugt handelt es sich bei der erfindungsgemäß eingesetzten Komponente (B) um Me-NH-CO-NH-m-Tetramethylxylylen-NH-CO-NH-Me, Me-NH-CO-NH-(3-Methylen-3,5,5-trimethylcyclohexylen)-NH-CO-NH-Me,
Me-NH-CO-NH-Methylen-bis-(4-cyclohexylen)-NH-CO-NH-Me,
Bu-NH-CO-NH-m-Tetramethylxylylen-NH-CO-NH-Bu,
Bu-NH-CO-NH-(3-Methylen-3,5,5-trimethylcyclohexylen)-NH-CO-NH-Bu,
Bu-NH-CO-NH-Methylen-bis-(4-cyclohexylen)-NH-CO-NH-Bu,
Me₃Si-(O-SiMe₂)₁₅-(CH₂)₃-NH-CO-NH-m-Tetramethylxylylen-NH-CO-NH-(CH₂)₃-(SiMe₂-O)₁₅-SiMe₃,
Me₃Si-(O-SiMe₂)₁₅-(CH₂)₃-NH-CO-NH-(3-Methylen-3,5,5-trimethylcyclohexylen)-NH-CO-NH-(CH₂)₃-(SiMe₂-O)₁₅-SiMe₃,
Me₃Si-(O-SiMe₂)₁₅-(CH₂)₃-NH-CO-NH-Methylen-bis-(4-cyclohexylen)-NH-CO-NH-(CH₂)₃-(SiMe₂-O)₁₅-SiMe₃,
Et-O-CO-NH-1,3-Tetramethylxylylen-NH-CO-O-Et,
Et-O-CO-NH-(3-Methylen-3,5,5-trimethylcyclohexylen)-NH-CO-O-Et,
Et-O-CO-NH-Methylen-bis-(4-cyclohexylen)-NH-CO-O-Et,
(EtO)₃Si-(CH₂)₃-NH-CO-NH-m-Tetramethylxylylen-NH-CO-NH-(CH₂)₃-Si(OEt)₃,
(EtO)₃Si-(CH₂)₃-NH-CO-NH-(3-Methylen-3,5,5-trimethylcyclohexylen)-NH-CO-NH-(CH₂)₃-Si(OEt)₃ sowie (EtO)₃Si-(CH₂)₃-NH-CO-NH-Methylen-bis-(4-cyclohexylen)-NH-CO-NH-(CH₂)₃-Si(OEt)₃,
besonders bevorzugt um
Bu-NH-CO-NH-m-Tetramethylxylylen-NH-CO-NH-Bu,
Bu-NH-CO-NH-(3-Methylen-3,5,5-trimethylcyclohexylen)-NH-CO-NH-Bu,
Bu-NH-CO-NH-Methylen-bis-(4-cyclohexylen)-NH-CO-NH-Bu,
Et-O-CO-NH-m-Tetramethylxylylen-NH-CO-O-Et,
Et-O-CO-NH-(3-Methylen-3,5,5-trimethylcyclohexylen)-NH-CO-O-Et,
Et-O-CO-NH-Methylen-bis-(4-cyclohexylen)-NH-CO-O-Et,
(EtO)₃Si-(CH₂)₃-NH-CO-NH-m-Tetramethylxylylen-NH-CO-NH-(CH₂)₃-Si(OEt)3,
(EtO)₃Si-(CH₂)₃-NH-CO-NH-(3-Methylen-3,5,5-trimethylcyclohexylen)-NH-CO-NH-(CH₂)₃-Si(OEt)₃ sowie
(EtO)₃Si-(CH₂)₃-NH-CO-NH-Methylen-bis-(4-cyclohexylen)-NH-CO-NH-(CH₂)₃-Si(OEt)₃,
insbesondere um
Bu-NH-CO-NH-m-Tetramethylxylylen-NH-CO-NH-Bu,
Bu-NH-CO-NH-(3-Methylen-3,5,5-trimethylcyclohexylen)-NH-CO-NH-Bu,
Bu-NH-CO-NH-Methylen-bis-(4-cyclohexylen)-NH-CO-NH-Bu,
Et-O-CO-NH-m-Tetramethylxylylen-NH-CO-O-Et,
Et-O-CO-NH-(3-Methylen-3,5,5-trimethylcyclohexylen)-NH-CO-O-Et und
Et-O-CO-NH-Methylen-bis-(4-cyclohexylen)-NH-CO-O-Et, wobei Me Methylrest, Et Ethylrest und Bu Butylrest bedeutet.

In einer besonders bevorzugten Ausführungsform sind in der Komponente (B) die Reste A' gleich Rest A, Reste Y' gleich Rest Y und Reste E gleich Rest D der jeweils eingesetzten Komponente (A).

Typischerweise handelt es sich bei den Komponenten (B) um farblose bis weiße Feststoffe, die aufgrund der begrenzten thermischen Belastbarkeit kaum unzersetzt schmelzbar sind.

Die erfindungsgemäß eingesetzten Verbindungen der Formel (2) haben ein Molekulargewicht von bevorzugt bis 5 000, besonders bevorzugt bis 3 000, insbesondere bis 2 000.

Die erfindungsgemäß eingesetzte Komponente (B) kann analog beliebiger chemischer Verfahren hergestellt werden, die dem Fachmann bereits bekannt sind und beispielsweise zur Synthese von Urethanen und Harnstoffen eingesetzt werden.

Bevorzugt wird die erfindungsgemäß eingesetzte Komponente (B) durch Umsetzung von Diisocyanat der Formel (3)

OCN-Y'-NCO

mit Verbindung der Formel (4)

Z-A'-H

und gegebenenfalls mit Kettenverlängerer der Formel (5)

H-A'-E-A'-H

hergestellt, wobei Y', Z, A' und E eine der oben angegebenen Bedeutungen haben und die Umsetzung gegebenenfalls in Anwesenheit von organischem Lösungsmittel und gegebenenfalls in Anwesenheit von Katalysatoren durchgeführt wird.

Beispiele für Diisocyanate der Formel (3), die zur Herstellung von Komponente (B) eingesetzt werden können, sind 1,6-n-Hexamethylendiisocyanat, Methylen-bis-(4-isocyanatocyclohexan), m-Tetramethylxylylendiisocyanat, Diphenylmethan-4,4-diisocyanat, Isophorondiisocyanat, 1,4-Cyclohexylendiisocyanat, 2,4-Tolylendiisocyanat und 2,6-Tolylendiisocyanat, wobei 1,6-Hexamethylendiisocyanat, Methylen-bis-(4-isocyanatocyclohexan), m-Tetramethylxylylendiisocyanat, Diphenylmethan-4,4-diisocyanat, und Isophorondiisocyanat bevorzugt und Methylen-bis-(4-isocyanatocyclohexan), m-Tetramethylxylylendiisocyanat, und Isophorondiisocyanat besonders bevorzugt sind.

Beispiele für Alkohole der Formel (4), die zur Herstellung von Komponente (B) eingesetzt werden können, sind Methanol, Ethanol, n-Propanol Isopropanol, n-Butanol, Isobutanol, tert.-Butanol, Hexanol, Heptanol und Dodecanol, wobei Methanol, Ethanol, Isopropanol und n-Butanol bevorzugt und Methanol, Ethanol und Isopropanol besonders bevorzugt sind.

Beispiele für Amine der Formel (4), die zur Herstellung von Komponente (B) eingesetzt werden können, sind Methylamin, Propylamin, Ethylamin, Butylamin, Hexylamin, 2-Ethylhexylamin und Dodecylamin sowie Aminosilane, wie 3-Aminopropyltriethoxylsilan, 3-Aminopropyltrimethoxysilan, Cyclohexylaminomethyltriethoxysilan, Cyclohexylaminomethyl(diethoxy)methylsilan, Phenylaminomethyltrimethoxysilan und Phenylaminomethyl(dimethoxy)methylsilan, wobei Butylamin, Hexylamin, 2-Ethylhexylamin, 3-Aminopropyltriethoxysilan, 3-Aminopropyltrimethoxysilan, Cyclohexylaminomethyltriethoxysilan und Phenylaminomethyltrimethoxysilan bevorzugt sowie Butylamin, 2-Ethylhexylamin und 3-Aminopropyltrimethoxysilan besonders bevorzugt sind.

Beispiele für Kettenverlängerer der Formel (5), die für die Herstellung von Komponente (B) eingesetzt werden können, sind Diamine wie z.B. 1,2-Ethylendiamin, 1,3-Propylendiamin, 1,4-n-Butylendiamin, 1,5-n-Pentylendiamin, 1,6-n-Hexylendiamin, 2-Methyl-1,5-Pentylendiamin, 1,4-Phenylendiamin, Diole wie z.B. 1,2-Ethandiol, 1,4-n-Butandiol, 1,6-n-Hexandiol, 1,4-Cyclohexandiol oder auch Dithiole wie z.B. 1,4-Butandithiol, wobei 1,2-Ethylendiamin, 1,4-n-Butylendiamin, 2-Methyl-1,5-Pentylendiamin und 1,4-n-Butandiol bevorzugt sind und 1,2-Ethylendiamin, 2-Methyl-1,5-Pentylendiamin und 1,4-n-Butandiol besonders bevorzugt sind.

In einer bevorzugten Verfahrensvariante zur Herstellung von Komponente (B) werden das entsprechende Diisocyanat und das Amin oder der Alkohol zusammen mit gegebenenfalls erwünschtem Kettenverlängerer gegebenenfalls in Gegenwart von Katalysator umgesetzt, wobei die Umsetzung bevorzugt in einem organischen polar aprotischen Lösungsmittel durchgeführt wird. Bevorzugt wird dabei das Amin oder der Alkohol ggf. zusammen mit Katalysator und/oder Kettenverlängerer im Lösungsmittel vorgelegt und das Diisocyanat langsam zugegeben, um etwaige Nebenreaktionen zu vermeiden.

Das Amin bzw. der Alkohol wird dabei zum Diisocyanat in einem molaren Verhältnis von bevorzugt 1,8 bis 2,2:1, besonders bevorzugt von 1,9 bis 2,1:1, ganz besonders bevorzugt von 1,95 bis 2,05:1 und insbesondere von 1,99 bis 2,01:1, eingesetzt.

Wenn Kettenverlängerer eingesetzt wird, wird zusätzliches Isocyanat im molaren Verhältnis von bevorzugt 0,8 bis 1,2:1, besonders bevorzugt von 0,95 bis 1,05:1 und insbesondere von 0,99 bis 1,01:1, jeweils zum Kettenverlängerer, zugegeben.

Die Umsetzung erfolgt bevorzugt bei Temperaturen zwischen 10 und 150°C, besonders bevorzugt bei 15 bis 130°C und insbesondere bei 20 bis 120°C, und bevorzugt beim Druck der umgebenden Atmosphäre, also zwischen 900 und 1100 hPa.

Bevorzugte Lösungsmittel, die gegebenenfalls zur Herstellung der Komponente (B) eingesetzt werden können, sind polar aprotische organische Flüssigkeiten, wie halogenierte Kohlenwasserstoffe, z.B. Dichlormethan, Chloroform oder Hexachlorethan, Ether wie z.B. Tetrahydrofuran, tert.-Butylmethylether oder Dioxan, Ketone wie z.B. Aceton, Methylethylketon oder Methylisobutylketon und Ester wie z.B. Essigsäureethylether, oder auch aromatische Lösungsmittel, wie z.B. Toluol oder Xylol. Falls zur Herstellung von Komponente (B) Lösungsmittel eingesetzt werden, handelt es sich besonders bevorzugt um Chloroform, Tetrahydrofuran und tert.-Butylmethylether.

Katalysatoren, welche zur Beschleunigung der Reaktion der Diisocyanate mit den eingesetzten Alkoholen verwendet werden können, sind die dem Fachmann aus der Polyurethanchemie bekannten tertiären Amine, wie z.B. N,N-Dimethylcyclohexylamin, N,N-Dimethylbenzylamin, N,N-Dimethylcetylamin und Diaminobicycloamin ("DABCO"), oder Organometallverbindungen wie z.B. Zinn(II)-oc-toate, Dibutylzinndilaurat ("DBTL"), Dioctylzinndilaurat oder Dibutylzinnoxid, Bleioctoate oder auch Bismut-Verbindungen wie Bismutoctoat oder Bismutneodecanoat (siehe z.B. "The ICI Polyurethane Handbook, 2nd Ed., Wiley, 1990), wobei Zinnverbindungen bevorzugt, und Dibutylzinndilaurat sowie Dioctylzinndilaurat besonders bevorzugt sind.

Die erfindungsgemäßen Zusammensetzungen enthalten Komponente (B) in Mengen von bevorzugt 0,1 bis 40 Gewichtsteilen, besonders bevorzugt 0,5 bis 20 Gewichtsteilen, insbesondere 1 bis 15 Gewichtsteilen, jeweils bezogen auf 100 Gewichtsteile Komponente (A).

Zusätzlich zu den Komponenten (A) und (B) können die erfindungsgemäßen Zusammensetzungen noch weitere Bestandteile enthalten, wie z.B. organische Lösungsmittel (C), UV-Stabilisatoren (D), Antioxidantien (E) und Füllstoffe (F).

Beispiele für gegebenenfalls eingesetzte organische Lösungsmittel (C) sind polar aprotische Lösungsmittel wie Ether, wie z.B. Tetrahydrofuran, Diethylether, tert.-Butylmethylether oder Dioxan, Ketone wie z.B. Aceton, Methylethylketon oder Methylisobutylketon, chlorierte Kohlenwasserstoffe wie z.B. Dichlormethan, Chloroform, Tetrachlorethan, und Ester wie z.B. Essigsäureethylester, sowie, falls A und A' in den Formeln (1) und (2) jeweils gleich NR¹ sind, polar protische organische Lösungsmittel, wie Alkohole wie z.B. Ethanol, n-Propanol, Isopropanol, n-Butanol oder Isobutanol. Wenn A und A' ganz oder zum Teil die Bedeutung von Sauerstoffatom oder Schwefelatom haben, werden die oben beschriebenen polar protischen Lösemittel bevorzugt nicht eingesetzt.

Die Bezeichnung Lösungsmittel bedeutet nicht, dass sich alle Reaktionskomponenten in diesem lösen müssen. Die Reaktion kann auch in einer Suspension oder Emulsion eines oder mehrerer Reaktionspartner durchgeführt werden. Die Reaktion kann auch in einem Lösungsmittelgemisch mit einer Mischungslücke ausgeführt werden, wobei in jeder der Mischphasen jeweils mindestens ein Reaktionspartner löslich ist.

Bevorzugt handelt es sich bei dem gegebenenfalls eingesetzten Lösungsmittel (C) um polar aprotische Lösungsmittel wie z.B. Tetrahydrofuran, tert.-Butylmethylether, Methylethylketon, Methylisobutylketon und Chloroform, insbesondere um Tetrahydrofuran und Chloroform.

Falls die erfindungsgemäßen Zusammensetzungen Lösungsmittel (C) enthalten, handelt es sich um Mengen von bevorzugt 2 bis 10 Gewichtsteilen, besonders bevorzugt von 4 bis 7 Gewichtsteilen, jeweils bezogen auf 1 Gewichtsteil Komponente (A). Die erfindungsgemäßen Massen enthalten bevorzugt kein Lösungsmittel (C).

Beispiele für gegebenenfalls eingesetzte UV-Stabilisatoren (D) sind 4-Hydroxybenzoate, Benzophenone, wie 2-Hydroxybenzophenone, Benzotriazole, wie 2-Hydroxyphenylbenzotriazole oder Triazin-Verbindungen.

Falls die erfindungsgemäßen Zusammensetzungen UV-Stabilisatoren (D) enthalten, handelt es sich um Mengen von bevorzugt 1 bis 5000 Gewichts-ppm, besonders bevorzugt von 100 bis 2000 Gewichts-ppm, jeweils bezogen auf das Gesamtgewicht von Komponenten (A) und (B).

Beispiele für die gegebenenfalls eingesetzten Antioxidantien (E) sind z.B. sterisch gehinderte Phenole, wie 2,6-di-tert.-butyl-4-methylphenol, 2,2'methylenbis(4-methyl-6-tert.-butylphenol), N,N'-1,6-hexamethylen-bis-3-(3,5-di-tert.-butyl-4-hydroxyphenyl)propionamide oder sterisch gehinderte Amine, wie z.B. Verbindungen der Formeln.

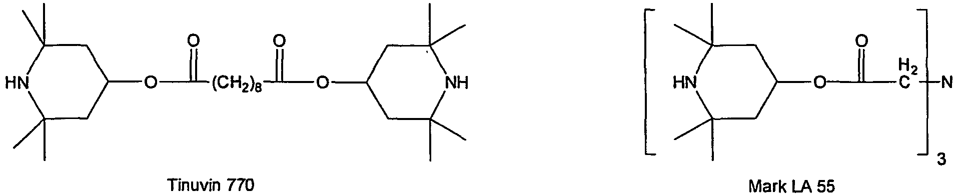

Falls die erfindungsgemäßen Zusammensetzungen Antioxidantien (E) enthalten, handelt es sich um Mengen von bevorzugt 1 bis 5000 Gewichts-ppm, besonders bevorzugt von 100 bis 2000 Gewichts-ppm, jeweils bezogen auf das Gesamtgewicht der Komponenten (A) und (B).

Beispiele für gegebenenfalls eingesetzten Füllstoff (F) sind verstärkende Füllstoffe, also Füllstoffe mit einer BET-Oberfläche von mindestens 30 m²/g, wie beispielsweise Ruße, pyrogen hergestellte Kieselsäure, gefällte Kieselsäure und Silicium-Aluminium-Mischoxide, wobei die genannten Füllstoffe hydrophobiert sein können, sowie nicht verstärkenden Füllstoffe, also Füllstoffe mit einer BET-Oberfläche von weniger als 30 m²/g, wie beispielsweise Pulver aus Quarz, Cristobalit, Diatomeenerde, Calciumsilikat, Zirkoniumsilikat, Montmorillonite, wie Bentonite, Zeolithe einschließlich der Molekularsiebe, wie Natriumaluminiumsilikat, Metalloxide, wie Aluminium- oder Zinkoxid bzw. deren Mischoxide, Metallhydroxide, wie Aluminiumhydroxid, Bariumsulfat, Calciumcarbonat, Gips, Siliciumnitrid, Siliciumcarbid, Bornitrid, Glas-, Kohle- und Kunststoffpulver sowie Glas- und Kunststoffhohlkugeln.

Bevorzugt handelt es sich bei Füllstoff (F) um pyrogene Kieselsäuren, wobei eine BET-Oberfläche von mindestens 30 m²/g besonders bevorzugt ist.

Falls die erfindungsgemäßen Zusammensetzungen Füllstoff (F) enthalten, handelt es sich um Mengen von bevorzugt 1 bis 1000 Gewichtsteile, besonders bevorzugt von 10 bis 500 Gewichtsteile, jeweils bezogen auf 100 Gewichtsteile des Gesamtgewichts der Komponente (A) und Komponente (B). Die erfindungsgemäßen Massen enthalten bevorzugt keine Füllstoffe (F).

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Die erfindungsgemäßen Zusammensetzungen enthalten über die Komponenten (A) bis (F) hinausgehend bevorzugt keine weiteren Komponenten.

Die Herstellung der erfindungsgemäßen Zusammensetzungen kann auf beliebige bisher bekannte Art und Weise erfolgen.

Ein weiterer Gegenstand der Erfindung ist ein Verfahren zur Herstellung der erfindungsgemäßen Zusammensetzungen, das (i) in Lösung, also in Anwesenheit von Lösungsmittel (C), oder (ii) Lösungsmittel-frei, also in Abwesenheit von Lösungsmittel (C), erfolgen kann.

Die organischen Lösungsmittel (C) werden in den Lösemittelbasierten Verfahrensvarianten in Mengen von bevorzugt 10 bis 5000 Gewichtsteilen, besonders bevorzugt 100 bis 2500 Gewichtsteilen, insbesondere 250 bis 1000 Gewichtsteilen, jeweils bezogen auf 100 Gewichtsteile der erfindungsgemäßen Zusammensetzung eingesetzt.

Bei der erfindungsgemäßen Verfahrensvariante (i) werden Komponente (A) und (B) sowie gegebenenfalls weitere Komponenten (D) bis (F) mit organischem Lösemittel (C) in beliebiger Reihenfolge und den gewünschten Mengenverhältnissen unter Durchmischung vermischt. Danach wird - falls erwünscht - die so erhaltene Mischung in eine Form gegeben und das Lösemittel entfernt, z.B. durch Verdampfen oder Verdunsten, wodurch die erfindungsgemäße Zusammensetzung in der gewünschten Form, z.B. als Film, erhalten wird.

Das Vermischen bei der erfindungsgemäßen Verfahrensvariante (i) erfolgt bei einem Druck von bevorzugt 0,1 mbar bis 25 bar, besonders bevorzugt bei 0,1 bis 5 bar, insbesondere bei 0,7 bis 1,3 bar.

Das Vermischen bei der Verfahrensvariante (i) erfolgt in einem Temperaturbereich von bevorzugt -40 bis 180°C, besonders bevorzugt von 0 bis 100°C, insbesondere bei 20 bis 60°C.

Bei der erfindungsgemäßen Verfahrensvariante (ii) werden die Komponenten (A), (B) sowie gegebenenfalls (D), (E) und (F) miteinander vermischt, wobei hierzu alle bisher bekannten Mischer, Kneter oder Extruder verwendet werden können. Die Variante (ii) kann kontinuierlich oder diskontinuierlich, bevorzugt kontinuierlich, durchgeführt werden. Besonders bevorzugt erfolgt die kontinuierliche Lösungsmittel-freie Herstellung (ii) der erfindungsgemäßen Zusammensetzungen unter Verwendung von eine oder zwei Wellen aufweisenden Extrudern.

Bei der Lösemittel-freien Verfahrensvariante (ii) erfolgt das Mischen bei einer Temperatur von vorzugsweise 20 bis 240°C, besonders bevorzugt bei 40 bis 180°C.

Die Lösungmittel-freie Herstellung (ii) der erfindungsgemäßen Zusammensetzungen ist insbesondere dann bevorzugt, wenn die erfindungsgemäße Zusammensetzung in Form von Granulaten oder komplexen Formkörpern, wie Profilen oder Spritzgusskörpern, zur Verfügung gestellt werden soll.

Bei dem erfindungsgemäßen Verfahren in Lösung kann auch - falls erwünscht - Komponente (B) (Variante (ib)) oder Komponente (A) (Variante (ia)) in situ hergestellt werden.

Bei der Herstellung der erfindungsgemäßen Zusammensetzung in Lösung werden in der Verfahrensvariante (ib) Komponente (A) und die gegebenenfalls eingesetzten Komponenten (D), (E) und (F) mit organischem Lösemittel (C) vermischt. Danach wird diese Mischung mit den zur Herstellung der Komponente (B) notwendigen Edukten vermischt und so die Komponente (B) in Anwesenheit der Komponente (A) und den weiteren Komponenten hergestellt. Bei dieser Verfahrensvariante wird bevorzugt in einem ersten Schritt Amin oder der Alkohol der Formel (4) zusammen mit dem zur Herstellung von (B) gegebenenfalls eingesetzten Katalysator sowie gegebenenfalls Kettenverlängerer der Formel (5) zuerst zur Mischung enthaltend Komponente (A), (C) sowie gegebenenfalls Komponenten (D), (E) und (F) gegeben. In einem zweiten Schritt wird dann Diisocyanat der Formel (3) zu der im ersten Schritt erhaltenen Mischung gegeben. Nach beendeter Dosierung der Edukte wird noch für eine Zeitspanne von bevorzugt 0,1 bis 24 Stunden, besonders bevorzugt bis zur vollständigen Reaktion, gerührt. Danach wird - falls erwünscht - die so erhaltene Mischung in eine Form gegeben und das Lösemittel entfernt, z.B. durch Verdampfen oder Verdunsten, wodurch die erfindungsgemäße Zusammensetzung in der gewünschten Form, z.B. als Film, erhalten wird.

Die erfindungsgemäße Verfahrensvariante (ib) erfolgt bei einem Druck von bevorzugt 0,1 mbar bis 25 bar, besonders bevorzugt bei einem Druck von 0,1 bis 5 bar, insbesondere bei einem Druck von 0,7 bis 1,3 bar.

Die erfindungsgemäße Verfahrensvariante (ib) erfolgt in einem Temperaturbereich von bevorzugt -40 bis 180°C, besonders bevorzugt von 0 bis 100°C, insbesondere bei einer Temperatur von 20 bis 70°C.

Bei der Herstellung der erfindungsgemäßen Zusammensetzung in Lösung werden in einer Verfahrensvariante (ia) Komponente (B) und die gegebenenfalls eingesetzten Komponenten (D), (E) und (F) mit organischem Lösemittel (C) vermischt. Danach wird diese Mischung mit den zur Herstellung der Komponente (A) eingesetzten Edukten der Formeln

H-A-X-SiR₂-(O-SiR₂)ₙ-X-A-H (6),

OCN-Y-NCO (7),

gegebenenfalls

H-A-D-A-H (8)

und/oder gegebenenfalls

R₃Si-(O-SiR₂)ₙ-X-A-H (9)

und/oder gegebenenfalls

R²-A-H (10),

wobei A, X, R, Y, D, R² und n die oben angegebenen Bedeutungen haben, vermischt und so die Komponente (A) in Anwesenheit der Komponente (B) hergestellt. Bevorzugt werden bei dieser Verfahrensvariante in einem ersten Schritt die zur Herstellung von Komponente (A) erforderlichen Edukte der Formeln 6) und gegebenenfalls (8), (9) und (10) zuerst zum Gemisch der Komponenten (B) und (C) sowie gegebenenfalls (D), (E) und (F) gegeben. In einem zweiten Schritt wird dann Diisocyanat der Formel (7) zur der im ersten Schritt erhaltenen Mischung gegeben. Nach beendeter Dosierung der Edukte wird noch für eine Zeitspanne von bevorzugt 0,1 bis 24 Stunden, bevorzugt bis zur vollständigen Reaktion, gerührt. Danach wird - falls erwünscht - die so erhaltene Mischung in eine Form gegeben und das Lösemittel entfernt, z.B. durch Verdampfen oder Verdunsten, wodurch die erfindungsgemäße Zusammensetzung in der gewünschten Form, z.B. als Film, erhalten wird.

Die erfindungsgemäße Variante (ia) wird bei einem Druck von bevorzugt 0,1 mbar bis 25 bar, besonders bevorzugt bei von 0,1 bis 5 bar, insbesondere bei 0,7 bis 1,3 bar, durchgeführt.

Die erfindungsgemäße Variante (ia) erfolgt in einem Temperaturbereich von bevorzugt -40 bis 180°C, besonders bevorzugt von 0 bis 100°C, insbesondere bei einer Temperatur von 20 bis 70°C.

Die erfindungsgemäßen Lösemittel-basierenden Varianten (i), (ia) und (ib) zur Herstellung der erfindungsgemäßen Zusammensetzungen werden bevorzugt unter Feuchtigkeitsausschluss und besonders bevorzugt unter Schutzgasatmosphäre, insbesondere trockenem Stickstoff oder Argon, durchgeführt.

Die Lösemittel-basierenden varianten (i), (ia) und (ib) zur Herstellung der erfindungsgemäßen Zusammensetzungen sind insbesondere bevorzugt, wenn die erfindungsgemäße Zusammensetzung in Form von Filmen, insbesondere mit einer Dicke von 0,1 µm bis 2 mm, zur Verfügung gestellt werden sollen.

Bevorzugt handelt es sich bei dem erfindungsgemäßen Verfahren um Verfahrensvariante (i), besonders bevorzugt um (ib).

Bei den erfindungsgemäßen Zusammensetzungen handelt es sich bevorzugt um bei Raumtemperatur und dem Druck der umgebenden Atmosphäre, also etwa 900 bis 1100 hPa, gummielastische Festkörper mit Zugfestigkeiten zwischen vorzugsweise etwa 0,5 und 40 MPa sowie Reißdehnungen zwischen bevorzugt etwa 50 bis 1000%. Bevorzugt handelt es sich um transparente, thermoplastische Materialien, die bei einem Druck von 900 bis 1100 hPa bei Temperaturen zwischen bevorzugt 60 und 200°C erweichen und dabei allmählich ihre gummielastischen Eigenschaften verlieren. Bevorzugt zeigen die erfindungsgemäßen Zusammensetzungen in Gelpermeationschromatogrammen eine bimodale Molekulargewichtverteilung durch gleichzeitiges nebeneinander Vorliegen der Komponenten (A) und (B).

Die erfindungsgemäßen Zusammensetzungen können für die gleichen Zwecke verwendet werden, für die auch bisher thermoplastische Elastomere verwendet werden. Die erfindungsgemäßen Zusammensetzungen können dabei in Dichtmassen, Klebstoffen, als Material für Fasern, als Kunststoffadditiv z.B. als Schlagzähverbesserer oder Flammschutzmittel, als Einbettungsmaterialien für Photovoltaikmodule, als Material für Entschäumerformulierungen, als Hochleistungspolymer (Thermoplast, thermoplastisches Elastomer, Elastomer), als Verpackungsmaterial für elektronische Bauteile, in Isolations- oder Abschirmungsmaterialien, in Kabelummantelungen, in Antifoulingmaterialien, als Additiv für Putz-, Reinigungs- oder Pflegemittel, als Additiv für Körperpflegemittel, als Beschichtungsmaterial für Holz, Papier und Pappe, als Formentrennmittel, als biokompatibles Material in medizinischen Anwendungen wie Kontaktlinsen, als Beschichtungsmaterial für Textilfasern oder zur Herstellung von textilen Geweben aus Fasern des thermoplastischen Materials, als Beschichtungsmaterial für Naturstoffe wie z.B. Leder und Pelze, als Material für Membranen und als Material für photoaktive Systeme z.B. für lithographische Verfahren, opt. Datensicherung oder optische Datenübertragung eingesetzt werden.

Die erfindungsgemäßen Zusammensetzungen haben den Vorteil, dass sie einfach herzustellen sind und ausgezeichnet verarbeitet werden können.

Des Weiteren haben die erfindungsgemäßen Zusammensetzungen den Vorteil, dass sie exzellente mechanische Eigenschaften aufweisen.

Die erfindungsgemäßen Zusammensetzungen haben ferner den Vorteil, dass bereits vorhandene Produkte (A) einfach entsprechend bestehender Anforderungen mechanisch verbessert werden können, ohne dass ein neues Basispolymer entwickelt werden muss.

Die erfindungsgemäßen Zusammensetzungen haben zudem den Vorteil, dass sie wesentlich bessere mechanische Eigenschaften aufweisen, als Polymere, die in einer Reaktion hergestellt werden, wie für Komponente (A) beschrieben, in der alle Edukte für die Synthese von (A) und (B) gemeinsam eingesetzt werden.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

Die Shore-A-Härte wird nach DIN (Deutsche Industrie Norm) 53505 (Ausgabe August 2000) bestimmt.

Zugfestigkeit, Reißdehnung und Modul (Spannung bei 100% Dehnung) wurden nach DIN 53504 (Ausgabe Mai 1994) an Probekörpern der Form S2 bestimmt.

### Herstellung der Komponente (B)

**Verbindung B1:** In einem trockenen 11-Dreihalskolben mit Rührer, Innenthermometer und Rückflusskühler mit Druckausgleich und Tropftrichter werden unter Stickstoff 35,80 g n-Butylamin mit 500 ml Tetrahydrofuran gemischt. Zu diesem Gemisch werden innerhalb von 30 Minuten gleichmäßig 64,20 g Methylen-bis-(4-isocyanatocyclohexan) gegeben. Während der Zugabe fällt das Produkt als weißer Feststoff aus. Nach beendeter Zugabe wird noch 30 Minuten bei Raumtemperatur gerührt und dann das Produkt abfiltriert, mehrmals mit n-Hexan nachgewaschen und schließlich unter reduziertem Druck getrocknet. Es werden 95,3 g des Reaktionsproduktes als weißer Feststoff erhalten.

**Verbindung B2:** In einem trockenen 21-Dreihalskolben mit Rührer, Innenthermometer und Rückflusskühler mit Druckausgleich und Tropftrichter werden unter Stickstoff 37,45 g n-Butylamin mit 1100 ml Chlorform und 250 ml Tetrahydrofuran gemischt. Zu diesem Gemisch werden innerhalb von 30 Minuten gleichmäßig 62,55 g m-Tetramethylxylylendiisocyanat gegeben, wobei die Reaktion der beiden Komponenten an der starken Exothermie zu beobachten ist. Nach beendeter Zugabe wird noch 30 Minuten bei Raumtemperatur gerührt und danach das Lösungsmittel am Rotationsverdampfer unter reduziertem Druck entfernt. Es werden 98,1 g des Reaktionsproduktes als weißer Feststoff erhalten.

**Verbindung B3:** In einem trockenen 11-Dreihalskolben mit Rührer, Innenthermometer und Rückflusskühler mit Druckausgleich und Tropftrichter werden unter Stickstoff 39,69 g n-Butylamin mit 500 ml Chloroform gemischt. Zu diesem Gemisch werden innerhalb von 30 Minuten gleichmäßig 60,31 g Isophorondiisocyanat gegeben, wobei die Reaktion der beiden Komponenten an der starken Exothermie zu beobachten ist. Nach beendeter Zugabe wird noch 30 Minuten bei Raumtemperatur gerührt und danach das Lösungsmittel am Rotationsverdampfer unter reduziertem Druck entfernt. Es werden 98,3 g des Reaktionsproduktes als weißer Feststoff erhalten.

**Verbindung B4:** In einem trockenen 11-Dreihalskolben mit Rührer, Innenthermometer und Rückflusskühler mit Druckausgleich und Tropftrichter werden unter Stickstoff 29,30 g n-Butylamin und 100 mg Dibutylzinn-dilaurat mit 500 ml Tetrahydrofuran gemischt. Zu diesem Gemisch werden innerhalb von 30 Minuten gleichmäßig 70,70 g Isophorondiisocyanat gegeben. Nach beendeter Zugabe wird noch 2 Stunden unter Rühren zum Rückfluss erhitzt und danach das Lösungmittel unter reduziertem Druck am Rotationsverdampfer entfernt. Es werden 97,6 g des Reaktionsproduktes als klares, zähflüssiges Öl erhalten. Nach einigen Tagen kristallisiert das Produkt aus.

**Verbindung B5:** In einem trockenen 11-Dreihalskolben mit Rührer, Innenthermometer und Rückflusskühler mit Druckausgleich und Tropftrichter werden unter Stickstoff 27,39 g Ethanol und 100 mg Dibutylzinn-dilaurat mit 500 ml Tetrahydrofuran gemischt. Zu diesem Gemisch werden innerhalb von 30 Minuten gleichmäßig 72,61 g m-Tetramethylxylylendiisocyanat gegeben. Nach beendeter Zugabe wird noch 2 Stunden unter Rühren zum Rückfluss erhitzt und danach das Lösungmittel unter reduziertem Druck am Rotationsverdampfer entfernt. Es werden 98,2 g des Reaktionsproduktes als weißer Feststoff erhalten.

**Verbindung B6:** In einem trockenen 11-Dreihalskolben mit Rührer, Innenthermometer und Rückflusskühler mit Druckausgleich und Tropftrichter werden unter Stickstoff 25,99 g Ethanol und 100 mg Dibutylzinn-dilaurat mit 500 ml Tetrahydrofuran gemischt. Zu diesem Gemisch werden innerhalb von 30 Minuten gleichmäßig 74,01 g Methylen-bis-(4-isocyanatocyclohexan)gegeben. Nach beendeter Zugabe wird noch 2 Stunden unter Rühren zum Rückfluss erhitzt und danach das Lösungmittel unter reduziertem Druck am Rotationsverdampfer entfernt. Es werden 99,1 g des Reaktionsproduktes als weißer Feststoff erhalten.

**Verbindung B7:** In einem trockenen 11-Dreihalskolben mit Rührer, Innenthermometer und Rückflusskühler mit Druckausgleich und Tropftrichter werden unter Stickstoff 59,60 g 2-Ethylhexylamin mit 500 ml Chloroform gemischt. Zu diesem Gemisch werden innerhalb von 30 Minuten gleichmäßig 60,4 g Methylen-bis-(4-isocyanatocyclohexan) gegeben. Nach beendeter Zugabe wird noch 30 Minuten bei Raumtemperatur gerührt und dann das Lösemittel unter reduziertem Druck abgetrennt. Das verbliebene Produkt wird mehrmals mit n-Hexan nachgewaschen und schließlich unter reduziertem Druck getrocknet. Es werden 116,3 g des Reaktionsproduktes als weißer Feststoff erhalten.

**Verbindung B8:** In einem trockenen 11-Dreihalskolben mit Rührer, Innenthermometer und Rückflusskühler mit Druckausgleich und Tropftrichter werden unter Stickstoff 61,6 g 2-Ethylhexylamin mit 500 ml Chloroform gemischt. Zu diesem Gemisch werden innerhalb von 30 Minuten gleichmäßig 58,4 g m-Tetramethylxylylen-di-isocyanat gegeben. Nach beendeter Zugabe wird noch 30 Minuten bei Raumtemperatur gerührt und dann das Lösemittel unter reduziertem Druck abgetrennt. Das verbliebene Produkt wird mehrmals mit n-Hexan nachgewaschen und schließlich unter reduziertem Druck getrocknet. Es werden 114,6 g des Reaktionsproduktes als weißer Feststoff erhalten.

**Verbindung B9:** In einem trockenen 11-Dreihalskolben mit Rührer, Innenthermometer und Rückflusskühler mit Druckausgleich und Tropftrichter werden unter Stickstoff 72,7 g 2-Ethylhexylamin mit 500 ml Tetrahydrofuran gemischt. Zu diesem Gemisch werden innerhalb von 30 Minuten gleichmäßig 47,3 g 1,6-Hexamethylendiisocyanat gegeben. Nach beendeter Zugabe wird noch 30 Minuten bei Raumtemperatur gerührt und dann das Lösemittel unter reduziertem Druck abgetrennt. Das verbliebene Produkt wird mehrmals mit n-Hexan nachgewaschen und schließlich unter reduziertem Druck getrocknet. Es werden 115,7 g des Reaktionsproduktes als weißer Feststoff erhalten.

**Verbindung B10:** In einem trockenen 11-Dreihalskolben mit Rührer, Innenthermometer und Rückflusskühler mit Druckausgleich und Tropftrichter werden unter Stickstoff 64,5 g 2-Ethylhexylamin mit 500 ml Tetrahydrofuran gemischt. Zu diesem Gemisch werden innerhalb von 30 Minuten gleichmäßig 55,5 g Isophorondiisocyanat gegeben. Nach beendeter Zugabe wird noch 30 Minuten bei Raumtemperatur gerührt und dann das Lösemittel unter reduziertem Druck abgetrennt. Das verbliebene Produkt wird mehrmals mit n-Hexan nachgewaschen und schließlich unter reduziertem Druck getrocknet. Es werden 118,2 g des Reaktionsproduktes als weißer Feststoff erhalten.

### Beispiel 1 (B1)

### Herstellung der Komponente (B) in Anwesenheit des thermoplastischen Siliconelastomers (A):

Unter Stickstoffatmosphäre wird eine Lösung von 120 g eines auf Methylen-bis(4-isocyanatocyclohexan) basierenden thermoplastischen Siliconelastomers (käuflich erhältlich unter der Bezeichnung GENIOMER^{®} 140 bei der Wacker Chemie AG, D-München) in 700 ml Chloroform in einem 21-Dreihalskolben mit Rührer, Rückflusskühler und Innerthermometer zubereitet. Dazu werden 4,77 g Butylamin gegeben und nach Erwärmen auf 60°C binnen 30 Minuten aus dem Tropftrichter 8,56 g Methylen-bis-(4-isocyanatocyclohexan) zugetropft. Die erhaltene Mischung wird 30 Minuten unter Rückfluss gerührt. Nach Abkühlen lässt man die Lösung 2 h bei Raumtemperatur stehen. Anschließend wird das Reaktionsgemisch in PTFE-Formen (Durchmesser 20 cm, Tiefe 2 mm) gegossen und 2 Tage im Abzug stehen gelassen, um das Lösungsmittel zu verdunsten. Nach Verdunsten des Lösungsmittels ist das Produkt klar, klebfrei und elastomer. An diesen Platten werden Untersuchungen zur Bestimmung der mechanischen Eigenschaften und zur Bestimmung der Molekulargewichtsverteilung (per GPC-Analyse) durchgeführt. Die Ergebnisse finden sich in Tabelle 1.

### Beispiel 2 (B2)

### Herstellung der Komponente (B) in Anwesenheit des thermoplastischen Siliconelastomers (A):

Unter Stickstoffatmosphäre wird eine Lösung von 120 g eines auf m-Tetramethylxylylendiisocyanat basierenden thermoplastischen Siliconelastomers (käuflich erhältlich unter der Bezeichnung GENIOMER^{®} 200 bei der Wacker Chemie AG, D-München) in 600 ml Chloroform in einem 21-Dreihalskolben mit Rührer, Rückflusskühler und Innerthermometer zubereitet. Dazu werden 4,99 g Butylamin gegeben und nach Erwärmen auf 60°C binnen 30 Minuten aus dem Tropftrichter 8,34 g m-Tetramethylxylylendiisocyanat zugetropft. Die erhaltene Mischung wird 30 Minuten unter Rückfluss gerührt. Nach Abkühlen lässt man die Lösung 2 h bei Raumtemperatur stehen. Anschließend wird das Reaktionsgemisch in PTFE-Formen (Durchmesser 20 cm, Tiefe 2 mm) gegossen und 2 Tage im Abzug stehen gelassen, um das Lösungsmittel zu verdunsten. Nach Verdunsten des Lösungsmittels ist das Produkt klar, klebfrei und elastomer. An diesen Platten werden Untersuchungen zur Bestimmung der mechanischen Eigenschaften und zur Bestimmung der Molekulargewichtsverteilung (per GPC-Analyse) durchgeführt. Die Ergebnisse finden sich in Tabelle 1.

### Beispiel 3 (B3)

### Herstellung der Komponente (B) in Anwesenheit des thermoplastischen Siliconelastomers (A):

Unter Stickstoffatmosphäre wird eine Lösung von 120 g eines auf Isophorondiisocyanat basierenden thermoplastischen Siliconelastomers (käuflich erhältlich unter der Bezeichnung GENIOMER^{®} 80 bei der Wacker Chemie AG, D-München) in 1100 ml Tetrahydrofuran in einem 21-Dreihalskolben mit Rührer, Rückflusskühler und Innerthermometer zubereitet. Dazu werden 5,29 g Butylamin gegeben und nach Erwärmen auf 60°C binnen 30 Minuten aus dem Tropftrichter 8,04 g Isophorondiisocyanat zugetropft. Die erhaltene Mischung wird 30 Minuten unter Rückfluss gerührt. Nach Abkühlen lässt man die Lösung 2 h bei Raumtemperatur stehen. Anschließend wird das Reaktionsgemisch in PTFE-Formen (Durchmesser 20 cm, Tiefe 2 mm) gegossen und 2 Tage im Abzug stehen gelassen, um das Lösungsmittel zu verdunsten. Nach Verdunsten des Lösungsmittels ist das Produkt klar, klebfrei und elastomer. An diesen Platten werden Untersuchungen zur Bestimmung der mechanischen Eigenschaften und zur Bestimmung der Molekulargewichtsverteilung (per GPC-Analyse) durchgeführt. Die Ergebnisse finden sich in Tabelle 1.

### Beispiel 4 (B4)

### Herstellung des thermoplastischen Siliconelastomers (A) in Anwesenheit der Komponente (B):

13,33 g der Verbindung B1 werden unter Stickstoffatmosphäre in einem 21-Dreihalskolben mit Rührer, Rückflusskühler und Innenthermometer in 850 ml Tetrahydrofuran gelöst. Dazu werden 109,1 g eines α,ω-aminopropylfunktionellen Polydimethylsiloxans mit einer mittleren Molmasse von ca. 2600 g/mol (käuflich erhältlich unter der Bezeichnung "FLUID NH 40 D" bei der Wacker Chemie AG, D-München) gegeben. Anschließend wird das Gemisch auf 60°C erwärmt und aus dem Tropftrichter binnen 30 Minuten eine Lösung von 11,06 g Methylen-bis-(4-isocyanatocyclohexan) in 150 ml Tetrahydrofuran zugegeben. Nach beendeter Zugabe wird zur Vervollständigung der Reaktion noch 30 Minuten bei 60°C weitergerührt. Nach Abkühlen lässt man die Lösung 2h bei Raumtemperatur stehen. Anschließend wird das Reaktionsgemisch in PTFE-Formen (Durchmesser 20 cm, Tiefe 2 mm) gegossen und 2 Tage im Abzug stehen gelassen, um das Lösungsmittel zu verdunsten. Nach Verdunsten des Lösungsmittels ist das Produkt klar, klebfrei und elastomer. An diesen Platten werden Untersuchungen zur Bestimmung der mechanischen Eigenschaften und zur Bestimmung der Molekulargewichtsverteilung (per GPC-Analyse) durchgeführt. Die Ergebnisse finden sich in Tabelle 1.

### Beispiel 5 (B5)

### Herstellung des thermoplastischen Siliconelastomers (A) in Anwesenheit der Komponente (B):

13,33 g der Verbindung B2 werden unter Stickstoffatmosphäre in einem 21-Dreihalskolben mit Rührer, Rückflusskühler und Innenthermometer in 1050 ml Tetrahydrofuran gelöst. Dazu werden 110 g eines α,ω-aminopropylfunktionellen Polydimethylsiloxans mit einer mittleren Molmasse von ca. 2600 g/mol (käuflich erhältlich unter der Bezeichnung "FLUID NH 40 D" bei der Wacker Chemie AG, D-München) gegeben. Anschließend wird das Gemisch auf 60°C erwärmt und aus dem Tropftrichter binnen 30 Minuten eine Lösung von 10,39 g m-Tetramethylxylylendiisocyanat in 200 ml Tetrahydrofuran zugegeben. Nach beendeter Zugabe wird zur Vervollständigung der Reaktion noch 30 Minuten bei 60°C weitergerührt. Nach Abkühlen lässt man die Lösung 2h bei Raumtemperatur stehen. Anschließend wird das Reaktionsgemisch in PTFE-Formen (Durchmesser 20 cm, Tiefe 2 mm) gegossen und 2 Tage im Abzug stehen gelassen, um das Lösungsmittel zu verdunsten. Nach Verdunsten des Lösungsmittels ist das Produkt klar, klebfrei und elastomer. An diesen Platten werden Untersuchungen zur Bestimmung der mechanischen Eigenschaften und zur Bestimmung der Molekulargewichtsverteilung (per GPC-Analyse) durchgeführt. Die Ergebnisse finden sich in Tabelle 1.

### Beispiel 6 (B6)

### Herstellung des thermoplastischen Siliconelastomers (A) in Anwesenheit der Komponente (B):

13,33 g der Verbindung B3 werden unter Stickstoffatmosphäre in einem 21-Dreihalskolben mit Rührer, Rückflusskühler und Innenthermometer in 850 ml Chloroform gelöst. Dazu werden 110,5 g eines α,ω-aminopropylfunktionellen Polydimethylsiloxans mit einer mittleren Molmasse von ca. 2600 g/mol (käuflich erhältlich unter der Bezeichnung "FLUID NH 40 D" bei der Wacker Chemie AG, D-München) gegeben. Anschließend wird das Gemisch auf 60°C erwärmt und aus dem Tropftrichter binnen 30 Minuten eine Lösung von 9,50 g Isophorondiisocyanat in 150 ml Tetrahydrofuran zugegeben. Nach beendeter Zugabe wird zur Vervollständigung der Reaktion noch 30 Minuten bei 60°C weitergerührt. Nach Abkühlen lässt man die Lösung 2h bei Raumtemperatur stehen. Anschließend wird das Reaktionsgemisch in PTFE-Formen (Durchmesser 20 cm, Tiefe 2 mm) gegossen und 2 Tage im Abzug stehen gelassen, um das Lösungsmittel zu verdunsten. Nach Verdunsten des Lösungsmittels ist das Produkt klar, klebfrei und elastomer. An diesen Platten werden Untersuchungen zur Bestimmung der mechanischen Eigenschaften und zur Bestimmung der Molekulargewichtsverteilung (per GPC-Analyse) durchgeführt. Die Ergebnisse finden sich in Tabelle 1.

### Vergleichsbeispiel 1 (V1)

### Herstellung eines thermoplastischen Siliconelastomers mit der gleichen molekularen Zusammensetzung wie die in Beispiel 1:

In einem 21-Dreihalskolben mit Rührer, Rückflusskühler und Innenthermometer werden 109,1 g eines α,ω-aminopropylfunktionellen Polydimethylsiloxans mit einer mittleren Molmasse von ca. 2600 g/mol (käuflich erhältlich unter der Bezeichnung "FLUID NH 40 D" bei der Wacker Chemie AG, D-München) und 4,77 g Butylamin in 400 ml Chloroform gelöst. Anschließend wird das Gemisch auf 60°C erwärmt und aus dem Tropftrichter binnen 30 Minuten eine Lösung von 19,62 g Methylen-bis-(4-isocyanatocyclohexan)in 200 ml Chloroform zugegeben. Nach beendeter Zugabe wird zur Vervollständigung der Reaktion noch 30 Minuten bei 60°C weitergerührt. Nach Abkühlen lässt man die Lösung 2h bei Raumtemperatur stehen. Anschließend wird das Reaktionsgemisch in PTFE-Formen (Durchmesser 20 cm, Tiefe 2 mm) gegossen und 2 Tage im Abzug stehen gelassen, um das Lösungsmittel zu verdunsten. Nach Verdunsten des Lösungsmittels ist das Produkt klar und klebfrei, jedoch nicht elastomer, sondern brüchig. An den erhaltenen Platten werden Untersuchungen zur Bestimmung der mechanischen Eigenschaften und zur Bestimmung der Molekulargewichtsverteilung (per GPC-Analyse) durchgeführt. Die Ergebnisse finden sich in Tabelle 1.

### Beispiel 7 (B7)

### Compoundierung des thermoplastischen Siliconelastomers (A) mit der Komponente (B):

900 g eines auf Methylen-bis-(4-isocyanatocyclohexan) basierenden thermoplastischen Siliconelastomers (käuflich erhältlich unter der Bezeichnung GENIOMER^{®} 140 bei der Wacker Chemie AG, D-München) in Form von Granulatkörnern mit 3-4 mm Durchmesser werden in einem Kunststoffbecher mit 100 g Verbindung B1 vermischt. Die so erhaltene Mischung wird über eine Feststoffdosierung in die Zone 1 eines gleichlaufenden Zweiwellenkneters dosiert (Typ ZSE 18 HP-45D der Fa. Leistritz; Temperaturverteilung: Einzug: 13°C; Zone 1: 120°C; Zone 2: 130°C; Zone 3-4: 170°C, 5: 160°C, 6: 150°C, 7: 140°C, 8: 145°C; Düse: 150 °C Schneckendrehzahl: 150 U/min). Das erhaltene Produkt wird als klarer Strang extrudiert und über ein Kühlbad in eine Granulierung geführt. 100 g des so erhaltenen Granulates werden in 1000 ml Tetrahydrofuran gelöst, in PTFE-Formen (Durchmesser 20 cm, Tiefe 2 mm) gegossen und 2 Tage im Abzug stehen gelassen, um das Lösungsmittel zu verdunsten. Nach Verdunsten des Lösungsmittels sind die Produkte klar, klebfrei und elastomer. An diesen Platten werden Untersuchungen zur Bestimmung der mechanischen Eigenschaften und zur Bestimmung der Molekulargewichtsverteilung (per GPC-Analyse) durchgeführt. Die Ergebnisse finden sich in Tabelle 1.

### Beispiel 8 (B8)

### Herstellung der Komponente (B) in Anwesenheit des thermoplastischen Siliconelastomers (A):

Unter Stickstoffatmosphäre wird eine Lösung von 120 g eines auf Methylen-bis(4-isocyanatocyclohexan) basierenden thermoplastischen Siliconelastomers (käuflich erhältlich unter der Bezeichnung GENIOMER® 140 bei der Wacker Chemie AG, D-München) in 700 ml Tetrahydrofuran in einem 21-Dreihalskolben mit Rührer, Rückflusskühler und Innerthermometer zubereitet. Dazu werden 3,91 g Ethanol und 100 mg Dibutylzinndilaurat gegeben und nach Erwärmen auf 60°C binnen 30 Minuten aus dem Tropftrichter 9,43 g Methylen-bis-(4-isocyanatocyclohexan)zugetropft. Die erhaltene Mischung wird 2 Stunden unter Rückfluss gerührt. Nach Abkühlen lässt man die Lösung 2 h bei Raumtemperatur stehen. Anschließend wird das Reaktionsgemisch in PTFE-Formen (Durchmesser 20 cm, Tiefe 2 mm) gegossen und 2 Tage im Abzug stehen gelassen, um das Lösungsmittel zu verdunsten. Nach Verdunsten des Lösungsmittels ist das Produkt trüb, klebfrei und elastomer. An diesen Platten werden Untersuchungen zur Bestimmung der mechanischen Eigenschaften und zur Bestimmung der Molekulargewichtsverteilung (per GPC-Analyse) durchgeführt. Die Ergebnisse finden sich in Tabelle 1.

### Beispiel 9 (B9)

### Herstellung der Komponente (B) in Anwesenheit des thermoplastischen Siliconelastomers (A):

Unter Stickstoffatmosphäre wird eine Lösung von 120 g eines auf m-Tetramethylxylylendiisocyanat basierenden thermoplastischen Siliconelastomers (käuflich erhältlich unter der Bezeichnung GENIOMER^{®} 200 bei der Wacker Chemie AG, D-München) in 1000 ml Tetrahydrofuran in einem 21-Dreihalskolben mit Rührer, Rückflusskühler und Innerthermometer zubereitet. Dazu werden 3,65 g Ethanol und 100 mg Dibutylzinndilaurat gegeben und - nach Erwärmen auf 60 °C - binnen 30 Minuten aus dem Tropftrichter 9,68 g m-Tetramethylxylylendiisocyanat zugetropft. Die erhaltene Mischung wird 2 Stunden unter Rückfluss gerührt. Nach Abkühlen lässt man die Lösung 2 h bei Raumtemperatur stehen. Anschließend wird das Reaktionsgemisch in PTFE-Formen (Durchmesser 20 cm, Tiefe 2 mm) gegossen und 2 Tage im Abzug stehen gelassen, um das Lösungsmittel zu verdunsten. Nach Verdunsten des Lösungsmittels ist das Produkt klar, klebfrei und elastomer. An diesen Platten werden Untersuchungen zur Bestimmung der mechanischen Eigenschaften und zur Bestimmung der Molekulargewichtsverteilung (per GPC-Analyse) durchgeführt. Die Ergebnisse finden sich in Tabelle 1.

### Beispiel 10 (B10)

### Herstellung der Komponente (B) in Anwesenheit des thermoplastischen Siliconelastomers (A):

Unter Stickstoffatmosphäre wird eine Lösung von 120 g eines auf Isophorondiisocyanat basierenden thermoplastischen Siliconelastomers (käuflich erhältlich unter der Bezeichnung GENIOMER^{®} 80 bei der Wacker Chemie AG, D-München) in 1100 ml Tetrahydrofuran in einem 21-Dreihalskolben mit Rührer, Rückflusskühler und Innerthermometer zubereitet. Dazu werden 3,47 g Ethanol und 100 mg Dibutylzinndilaurat gegeben und nach Erwärmen auf 60°C binnen 30 Minuten aus dem Tropftrichter 9,86 g Isophorondiisocyanat zugetropft. Die erhaltene Mischung wird 2 Stunden unter Rückfluss gerührt. Nach Abkühlen lässt man die Lösung 2 h bei Raumtemperatur stehen. Anschließend wird das Reaktionsgemisch in PTFE-Formen (Durchmesser 20 cm, Tiefe 2 mm) gegossen und 2 Tage im Abzug stehen gelassen, um das Lösungsmittel zu verdunsten. Nach Verdunsten des Lösungsmittels ist das Produkt klar, klebfrei und elastomer. An diesen Platten werden Untersuchungen zur Bestimmung der mechanischen Eigenschaften und zur Bestimmung der Molekulargewichtsverteilung (per GPC-Analyse) durchgeführt. Die Ergebnisse finden sich in Tabelle 1.

### Beispiel 11 (B11)

### Herstellung der Komponente (B) in Anwesenheit des thermoplastischen Siliconelastomers (A):

Unter Stickstoffatmosphäre wird eine Lösung von 120 g eines auf Methylen-bis(4-isocyanatocyclohexan) basierenden thermoplastischen Siliconelastomers (käuflich erhältlich unter der Bezeichnung GENIOMER^{®} 140 bei der Wacker Chemie AG, D-München) in 1200 ml Tetrahydrofuran in einem 21-Dreihalskolben mit Rührer, Rückflusskühler und Innenthermometer zubereitet. Dazu werden 4,99 g Butylamin gegeben und nach Erwärmen auf 60°C binnen 30 Minuten aus dem Tropftrichter eine Lösung von 8,34 g m-Tetramethylxylylendiisocyanat in 50 ml Tetrahydrofuran zugetropft. Die erhaltene Mischung wird 30 Minuten unter Rückfluss gerührt. Nach Abkühlen lässt man die Lösung 2 h bei Raumtemperatur stehen. Anschließend wird das Reaktionsgemisch in PTFE-Formen (Durchmesser 20 cm, Tiefe 2 mm) gegossen und 2 Tage im Abzug stehen gelassen, um das Lösungsmittel zu verdunsten. Nach Verdunsten des Lösungsmittels ist das Produkt klar, klebfrei und elastomer. An diesen Platten werden Untersuchungen zur Bestimmung der mechanischen Eigenschaften und zur Bestimmung der Molekulargewichtsverteilung (per GPC-Analyse) durchgeführt. Die Ergebnisse finden sich in Tabelle 1.

### Beispiel 12 (B12)

### Herstellung der Komponente (B) in Anwesenheit des thermoplastischen Siliconelastomers (A):

Unter Stickstoffatmosphäre wird eine Lösung von 120 g eines auf m-Tetramethylxylylendiisocyanat basierenden thermoplastischen Siliconelastomers (käuflich erhältlich unter der Bezeichnung GENIOMER^{®} 200 bei der Wacker Chemie AG, D-München) in 550 ml Tetrahydrofuran in einem 21-Dreihalskolben mit Rührer, Rückflusskühler und Innerthermometer zubereitet. Dazu werden 5,29 g Butylamin gegeben und nach Erwärmen auf 60°C binnen 30 Minuten aus dem Tropftrichter eine Lösung von 8,04 g Isophorondiisocyanat in 50 ml Tetrahydrofuran zugetropft. Die erhaltene Mischung wird 30 Minuten unter Rückfluss gerührt. Nach Abkühlen lässt man die Lösung 2 h bei Raumtemperatur stehen. Anschließend wird das Reaktionsgemisch in PTFE-Formen (Durchmesser 20 cm, Tiefe 2 mm) gegossen und 2 Tage im Abzug stehen gelassen, um das Lösungsmittel zu verdunsten. Nach Verdunsten des Lösungsmittels ist das Produkt klar, klebfrei und elastomer. An diesen Platten werden Untersuchungen zur Bestimmung der mechanischen Eigenschaften und zur Bestimmung der Molekulargewichtsverteilung (per GPC-Analyse) durchgeführt. Die Ergebnisse finden sich in Tabelle 1.

### Beispiel 13 (B13)

### Herstellung der Komponente (B) in Anwesenheit des thermoplastischen Siliconelastomers (A):

Unter Stickstoffatmosphäre wird eine Lösung von 120 g eines auf Isophorondiisocyanat basierenden thermoplastischen Siliconelastomers (käuflich erhältlich unter der Bezeichnung GENIOMER^{®} 80 bei der Wacker Chemie AG, D-München) in 1100 ml Tetrahydrofuran in einem 21-Dreihalskolben mit Rührer, Rückflusskühler und Innerthermometer zubereitet. Dazu werden 4,77 g Butylamin gegeben und nach Erwärmen auf 60 °C binnen 30 Minuten aus dem Tropftrichter eine Lösung von 8,56 g Methylen-bis-(4-isocyanatocyclohexan) in 100 ml THF zugetropft. Die erhaltene Mischung wird 30 Minuten unter Rückfluss gerührt. Nach Abkühlen lässt man die Lösung 2 h bei Raumtemperatur stehen. Anschließend wird das Reaktionsgemisch in PTFE-Formen (Durchmesser 20 cm, Tiefe 2 mm) gegossen und 2 Tage im Abzug stehen gelassen, um das Lösungsmittel zu verdunsten. Nach Verdunsten des Lösungsmittels ist das Produkt klar, klebfrei und elastomer. An diesen Platten werden Untersuchungen zur Bestimmung der mechanischen Eigenschaften und zur Bestimmung der Molekulargewichtsverteilung (per GPC-Analyse) durchgeführt. Die Ergebnisse finden sich in Tabelle 1.

### Vergleichsbeispiel 2 (V2)

120 g eines auf Methylen-bis(4-isocyanatocyclohexan) basierenden thermoplastischen Siliconelastomers (käuflich erhältlich unter der Bezeichnung GENIOMER^{®} 140 bei der Wacker Chemie AG, D-München) werden in 1200 ml Tetrahydrofuran in einem 21-Kolben gelöst. Die so erhaltene Lösung wird in PTFE-Formen (Durchmesser 20 cm, Tiefe 2 mm) gegossen und 2 Tage im Abzug stehen gelassen, um das Lösungsmittel zu verdunsten. Nach Verdunsten des Lösungsmittels ist das Produkt klar, klebfrei und elastomer. An diesen Platten werden Untersuchungen zur Bestimmung der mechanischen Eigenschaften und zur Bestimmung der Molekulargewichtsverteilung (per GPC-Analyse) durchgeführt. Die Ergebnisse finden sich in Tabelle 1.

### Vergleichsbeispiel 3 (V3)

120 g eines auf m-Tetramethylxylylendiisocyanat basierenden thermoplastischen Siliconelastomers (käuflich erhältlich unter der Bezeichnung GENIOMER^{®} 200 bei der Wacker Chemie AG, D-München) werden in 600 ml Chloroform in einem 21-Kolben gelöst.

Die so erhaltene Lösung wird in PTFE-Formen (Durchmesser 20 cm, Tiefe 2 mm) gegossen und 2 Tage im Abzug stehen gelassen, um das Lösungsmittel zu verdunsten. Nach Verdunsten des Lösungsmittels ist das Produkt klar, klebfrei und elastomer. An diesen Platten werden Untersuchungen zur Bestimmung der mechanischen Eigenschaften und zur Bestimmung der Molekulargewichtsverteilung (per GPC-Analyse) durchgeführt. Die Ergebnisse finden sich in Tabelle 1.

### Vergleichsbeispiel 4 (V4)

120 g eines auf Isophorondiisocyanat basierenden thermoplastischen Siliconelastomers (käuflich erhältlich unter der Bezeichnung GENIOMER^{®} 80 bei der Wacker Chemie AG, D-München) werden in 1000 ml Tetrahydrofuran in einem 21-Kolben gelöst. Die so erhaltene Lösung wird in PTFE-Formen (Durchmesser 20 cm, Tiefe 2 mm) gegossen und 2 Tage im Abzug stehen gelassen, um das Lösungsmittel zu verdunsten. Nach Verdunsten des Lösungsmittels ist das Produkt klar, klebfrei und elastomer. An diesen Platten werden Untersuchungen zur Bestimmung der mechanischen Eigenschaften und zur Bestimmung der Molekulargewichtsverteilung (per GPC-Analyse) durchgeführt. Die Ergebnisse finden sich in Tabelle 1.

**Tabelle 1**

| Nr. | Härte [Shore A] | Zugfestigkeit [MPa] | Spannungswert bei 100% Dehnung [MPa] | Reißdehnung [%] | Mp [g/mol]¹⁾ |
|---|---|---|---|---|---|
| **B1** | 73 | 12,4 | 2,89 | 645 | 118455/587 |
| **B2** | 72 | 9,1 | 3,58 | 527 | 131062/500 |
| **B3** | 53 | 12,2 | 1,41 | 687 | 168275/505 |
| **B4** | 71 | 11,6 | 2,58 | 620 | 130561/589 |
| **B5** | 72 | 8,5 | 3,62 | 531 | 143897/502 |
| **B6** | 55 | 11,6 | 1,67 | 697 | 172364/499 |
| **B7** | 65 | 8,6 | 2,18 | 637 | 67163/544 |
| **B8** | 57 | 8,3 | 1,74 | 612 | 117016/494 |
| **B9** | 70 | 5,6 | 2,83 | 563 | 171224/483 |
| **B10** | 50 | 8,9 | 1,34 | 621 | 168495/682 |
| **B11** | 86 | 6,9 | 4,75 | 409 | 102696/499 |
| **B12** | 78 | 4,3 | 2,98 | 664 | 131734/493 |
| **B13** | 48 | 9,1 | 1,61 | 548 | 164231/587 |
| **V1** | 67 | 2,1 | --²⁾ | 14 | 73016 |
| **V2** | 56 | 7,1 | 1,7 | 561 | 103518 |
| **V3** | 67 | 4,4 | 2,58 | 604 | 134211 |
| **V4** | 48 | 8,6 | 1,2 | 642 | 177791 |

| | | | | | |
|---|---|---|---|---|---|
| ¹⁾ Die größere Zahl ist dem Molekulargewicht der Komponente (A), die kleinere Zahl dem Molekulargewicht der Komponente (B) zuzuordnen. ²⁾ Keine Angabe möglich, da die Reißdehnung nur bei 14 % liegt | | | | | |

### Beispiel 14 (B14)

In einem 500 ml Dreihalskolben mit Rührer, Tropftrichter, Innenthermometer und Rückflusskühler werden 5,96 g 2-Ethylhexylamin in 50 ml Chloroform gelöst und zu dieser Mischung binnen 30 Minuten eine Lösung von 6,04 g Methylen-bis-(4-isocyanatohe-xan) in 50 ml Chloroform getropft. Nach beendeter Zugabe wird noch 30 min bei Umgebungstemperatur gerührt und so eine Lösung der Komponente (B) erhalten.
In einem 21 Dreihalskolben mit Rührer, Tropftrichter, Innenthermometer und Rückflußkühler werden 111,34 g eines α,ω-aminopropylfunktionellen Polydimethylsiloxans mit einer mittleren Molmasse von ca. 11000 g/mol (käuflich erhältlich unter der Bezeichnung "FLUID NH 165 D" bei der Wacker Chemie AG, D-München) in 900 ml Tetrahydrofuran gelöst. Anschließend wird das Gemisch auf 60°C erwärmt und aus einem Tropftrichter binnen 30 Minuten eine Lösung von 2,66 g Methylen-bis-(4-isocyanatohexan) in 50 ml Tetrahydrofuran zugegeben. Nach beendeter Zugabe wird zur Vervollständigung der Reaktion noch 30 Minuten bei 60°C weitergerührt. Danach wird binnen 30 Minuten die oben beschriebene Lösung der Komponente (B) zugetropft. Nach beendeter Zugabe läßt man die Lösung abkühlen und dann 2h bei Raumtemperatur stehen. Anschließend wird das Reaktionsgemisch in PTFE-Formen (Durchmesser 20 cm, Tiefe 2 mm) gegossen und 2 Tage im Abzug stehen gelassen, um das Lösungsmittel zu verdunsten. Nach Verdunsten des Lösungsmittels ist das Produkt klar, klebfrei und elastomer. An diesen Platten werden Untersuchungen zur Bestimmung der mechanischen Eigenschaften und zur Bestimmung der Molekulargewichtsverteilung (per GPC-Analyse) durchgeführt. Die Ergebnisse finden sich in Tabelle 2.

### Beispiel 15 (B15)

In einem 500 ml Dreihalskolben mit Rührer, Tropftrichter, Innenthermometer und Rückflußkühler werden 2,98 g 2-Ethylhexylamin in 25 ml Chloroform gelöst und zu dieser Mischung binnen 30 Minuten eine Lösung von 3,02 g Methylen-bis-(4-isocyanatohexan) in 25 ml Chloroform getropft. Nach beendeter Zugabe wird noch 30 min bei Umgebungstemperatur gerührt und so eine Lösung der Komponente (B) erhalten.

In einem 21 Dreihalskolben mit Rührer, Tropftrichter, Innenthermometer und Rückflußkühler werden 111,34 g eines α,ω-aminopropylfunktionellen Polydimethylsiloxans mit einer mittleren Molmasse von ca. 11000 g/mol (käuflich erhältlich unter der Bezeichnung "FLUID NH 165 D" bei der Wacker Chemie AG, D-München) in 900 ml Tetrahydrofuran gelöst. Anschließend wird das Gemisch auf 60°C erwärmt und aus einem Tropftrichter binnen 30 Minuten eine Lösung von 2,66 g Methylen-bis-(4-isocyanatohexan) in 50 ml Tetrahydrofuran zugegeben. Nach beendeter Zugabe wird zur Vervollständigung der Reaktion noch 30 Minuten bei 60°C weitergerührt. Danach wird binnen 30 Minuten die oben beschriebene Lösung der Komponente (B) zugetropft. Nach beendeter Zugabe lässt man die Lösung abkühlen und dann 2h bei Raumtemperatur stehen. Anschließend wird das Reaktionsgemisch in PTFE-Formen (Durchmesser 20 cm, Tiefe 2 mm) gegossen und 2 Tage im Abzug stehen gelassen, um das Lösungsmittel zu verdunsten. Nach Verdunsten des Lösungsmittels ist das Produkt klar, klebfrei und elastomer. An diesen Platten werden Untersuchungen zur Bestimmung der mechanischen Eigenschaften und zur Bestimmung der Molekulargewichtsverteilung (per GPC-Analyse) durchgeführt. Die Ergebnisse finden sich in Tabelle 2.

### Beispiel 16 (B16)

In einem 500 ml Dreihalskolben mit Rührer, Tropftrichter, Innenthermometer und Rückflußkühler werden 1,19 g 2-Ethylhexylamin in 10 ml Chloroform gelöst und zu dieser Mischung binnen 30 Minuten eine Lösung von 1,21 g Methylen-bis-(4-isocyanatohexan) in 10 ml Chloroform getropft. Nach beendeter Zugabe wird noch 30 min bei Umgebungstemperatur gerührt und so eine Lösung der Komponente (B) erhalten.
In einem 21 Dreihalskolben mit Rührer, Tropftrichter, Innenthermometer und Rückflußkühler werden 111,34 g eines α,ω-aminopropylfunktionellen Polydimethylsiloxans mit einer mittleren Molmasse von ca. 11000 g/mol (käuflich erhältlich unter der Bezeichnung "FLUID NH 165 D" bei der Wacker Chemie AG, D-München) in 900 ml Tetrahydrofuran gelöst. Anschließend wird das Gemisch auf 60°C erwärmt und aus einem Tropftrichter binnen 30 Minuten eine Lösung von 2,66 g Methylen-bis-(4-isocyanatohexan) in 50 ml Tetrahydrofuran zugegeben. Nach beendeter Zugabe wird zur Vervollständigung der Reaktion noch 30 Minuten bei 60°C weitergerührt. Danach wird binnen 30 Minuten die oben beschriebene Lösung der Komponente (B) zugetropft. Nach beendeter Zugabe läßt man die Lösung abkühlen und dann 2h bei Raumtemperatur stehen. Anschließend wird das Reaktionsgemisch in PTFE-Formen (Durchmesser 20 cm, Tiefe 2 mm) gegossen und 2 Tage im Abzug stehen gelassen, um das Lösungsmittel zu verdunsten. Nach Verdunsten des Lösungsmittels ist das Produkt klar, klebfrei und elastomer. An diesen Platten werden Untersuchungen zur Bestimmung der mechanischen Eigenschaften und zur Bestimmung der Molekulargewichtsverteilung (per GPC-Analyse) durchgeführt. Die Ergebnisse finden sich in Tabelle 2.

### Beispiel 17 (B17)

In einem 500ml Dreihalskolben mit Rührer, Tropftrichter, Innenthermometer und Rückflußkühler werden 0,60 g 2-Ethylhexylamin in 10 ml Chloroform gelöst und zu dieser Mischung binnen 30 Minuten eine Lösung von 0,60 g Methylen-bis-(4-isocyanatohexan) in 10 ml Chloroform getropft. Nach beendeter Zugabe wird noch 30 min bei Umgebungstemperatur gerührt und so eine Lösung der Komponente (B) erhalten.
In einem 21 Dreihalskolben mit Rührer, Tropftrichter, Innenthermometer und Rückflußkühler werden 111,34 g eines α,ω-aminopropylfunktionellen Polydimethylsiloxans mit einer mittleren Molmasse von ca. 11000 g/mol (käuflich erhältlich unter der Bezeichnung "FLUID NH 165 D" bei der Wacker Chemie AG, D-München) in 900 ml Tetrahydrofuran gelöst. Anschließend wird das Gemisch auf 60°C erwärmt und aus einem Tropftrichter binnen 30 Minuten eine Lösung von 2,66 g Methylen-bis-(4-isocyanatohexan) in 50 ml Tetrahydrofuran zugegeben. Nach beendeter Zugabe wird zur Vervollständigung der Reaktion noch 30 Minuten bei 60°C weitergerührt. Danach wird binnen 30 Minuten die oben beschriebene Lösung der Komponente (B) zugetropft. Nach beendeter Zugabe läßt man die Lösung abkühlen und dann 2h bei Raumtemperatur stehen. Anschließend wird das Reaktionsgemisch in PTFE-Formen (Durchmesser 20 cm, Tiefe 2 mm) gegossen und 2 Tage im Abzug stehen gelassen, um das Lösungsmittel zu verdunsten. Nach Verdunsten des Lösungsmittels ist das Produkt klar, klebfrei und elastomer. An diesen Platten werden Untersuchungen zur Bestimmung der mechanischen Eigenschaften und zur Bestimmung der Molekulargewichtsverteilung (per GPC-Analyse) durchgeführt. Die Ergebnisse finden sich in Tabelle 2.

### Vergleichsbeispiel 5 (V5)

In einem 21 Dreihalskolben mit Rührer, Tropftrichter, Innenthermometer und Rückflußkühler werden 111,34 g eines α,ω-amino-propylfunktionellen Polydimethylsiloxans mit einer mittleren Molmasse von ca. 11000 g/mol (käuflich erhältlich unter der Bezeichnung "FLUID NH 165 D" bei der Wacker Chemie AG, D-München) in 900 ml Tetrahydrofuran gelöst. Anschließend wird das Gemisch auf 60°C erwärmt und aus einem Tropftrichter binnen 30 Minuten eine Lösung von 2,66 g Methylen-bis-(4-isocyanatohexan) in 50 ml Tetrahydrofuran zugegeben. Nach beendeter Zugabe wird zur Vervollständigung der Reaktion noch 30 Minuten bei 60°C weitergerührt. Danach läßt man die Lösung abkühlen und dann 2h bei Raumtemperatur stehen. Anschließend wird das Reaktionsgemisch in PTFE-Formen (Durchmesser 20 cm, Tiefe 2 mm) gegossen und 2 Tage im Abzug stehen gelassen, um das Lösungsmittel zu verdunsten. Nach Verdunsten des Lösungsmittels ist das Produkt klar, klebfrei und elastomer. An diesen Platten werden Untersuchungen zur Bestimmung der mechanischen Eigenschaften und zur Bestimmung der Molekulargewichtsverteilung (per GPC-Analyse) durchgeführt. Die Ergebnisse finden sich in Tabelle 2.

**Tabelle 2**

| Nr. | Härte [ShoreA] | Zugfestigkeit [MPa] | Spannungswert bei 100% Dehnung [MPa] | Reißdehnung [%] | Mp [g/mol]¹⁾ | Gehalt Komponente (B) [Gew%] |
|---|---|---|---|---|---|---|
| **V5** | 30 | 2,82 | 0,59 | 754 | 528762 | 0 |
| **B14** | 38 | 5,17 | 0,84 | 821 | 755800/836 | 10 |
| **B15** | 35 | 4,23 | 0,71 | 627 | 726316/843 | 5 |
| **B16** | 32 | 3,43 | 0,72 | 715 | 637079/892 | 2 |
| **B17** | 32 | 2,91 | 0,68 | 589 | 598779/876 | 1 |

| | | | | | | |
|---|---|---|---|---|---|---|
| ¹⁾ Die größere Zahl ist dem Molekulargewicht der Komponente (A), die kleinere Zahl dem Molekulargewicht der Komponente (B) zuzuordnen. | | | | | | |

## Patentansprüche

1. Zusammensetzungen enthaltend
(A) Copolymere der allgemeinen Formel (1) 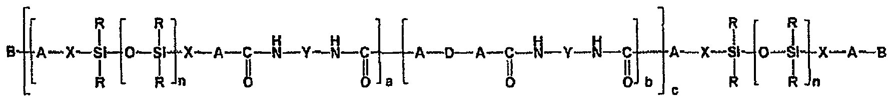 sowie
(B) Verbindung der allgemeinen Formel (2) 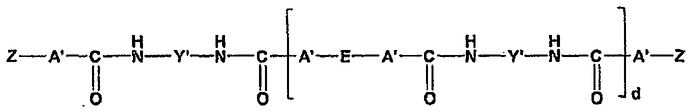 worin
**R** gleich oder verschieden sein kann und Wasserstoffatom oder einen einwertigen, SiC-gebundenen, gegebenenfalls substituierten Kohlenwasserstoffrest bedeutet,
**Y** gleich oder verschieden sein kann und zweiwertige, gegebenenfalls substituierte Kohlenwasserstoffreste darstellt,
**X** gleich oder verschieden sein kann und zweiwertige, SiC-gebundene, gegebenenfalls substituierte Kohlenwasserstoffreste, die durch Sauerstoffatome unterbrochen sein können, darstellt,
**A** gleich oder verschieden sein kann und Sauerstoffatom, Schwefelatom oder Aminogruppe -NR¹- bedeutet,
**R¹** gleich oder verschieden sein kann und Wasserstoffatom oder einen gegebenenfalls substituierten Kohlenwasserstoffrest bedeutet,
**D** gleich oder verschieden sein kann und einen gegebenenfalls durch Halogenatom, C₁-C₆-Alkyl- oder C₁-C₆-Alkylester substituierten Alkylenrest mit 1 bis 700 Kohlenstoffatomen darstellt, in dem einander nicht benachbarte Methyleneinheiten durch Gruppen -O-, -COO-, -OCO- oder -OCOO- ersetzt sein können,
**B** gleich oder verschieden sein kann und Wasserstoffatom, einen Rest OCN-Y-NH-CO-, einen Rest H₂N-Y-NH-CO-, einen R²-A-CO-NH-Y-NH-CO- oder einen Rest R₃Si-(O-SiR₂)ₙ-X-A-CO-NH-Y-NH-CO- darstellt,
**R²** gleich oder verschieden sein kann und einen einwertigen, gegebenenfalls Silyl-substituierten Kohlenwasserstoffrest bedeutet,
**A'** gleich oder verschieden sein kann und eine für A angegebene Bedeutung hat,
**Z** gleich oder verschieden sein kann und einen einwertigen, gegebenenfalls substituierten Kohlenwasserstoffrest oder einen einwertigen siliziumorganischen Rest darstellt,
**Y'** gleich oder verschieden sein kann und eine für Y angegebene Bedeutung hat,
**E** gleich oder verschieden sein kann und einen zweiwertigen, gegebenenfalls substituierten Kohlenwasserstoffrest darstellt,
**n** eine ganze Zahl von 1 bis 4000 ist,
**a** eine ganze Zahl von mindestens 1 ist,
**b** eine ganze Zahl von 0 bis 40 ist,
**c** eine ganze Zahl von mindestens 1 bedeutet und
**d** eine ganze Zahl von 0 bis 5 ist,
mit der Maßgabe, dass in Verbindung der Formel (1) die a Molekülblöcke und b Molekülblöcke im Polymer statistisch verteilt sein können.

2. Zusammensetzungen gemäß Anspruch 1, **dadurch gekennzeichnet, dass** b 0 ist.

3. Zusammensetzungen gemäß Anspruch 1 oder 2, **dadurch gekennzeichnet, dass** d 0 ist.

4. Zusammensetzungen gemäß einem oder mehreren der Ansprüche 1 bis 3, **dadurch gekennzeichnet, dass** Verbindungen der Formel (2) ein Molekulargewicht bis 5 000 haben.

5. Zusammensetzungen gemäß einem oder mehreren der Ansprüche 1 bis 4, **dadurch gekennzeichnet, dass** Komponente (B) in Mengen von 0,1 bis 40 Gewichtsteilen, bezogen auf 100 Gewichtsteile Komponente (A), enthalten ist.

6. Zusammensetzungen gemäß einem oder mehreren der Ansprüche 1 bis 5, **dadurch gekennzeichnet, dass** sie zusätzlich zu den Komponenten (A) und (B) noch weitere Bestandteile enthalten können, wie organische Lösungsmittel (C), UV-Stabilisatoren (D), Antioxidantien (E) und Füllstoffe (F).

7. Verfahren zur Herstellung der Zusammensetzungen gemäß einem oder mehreren der Ansprüche 1 bis 6, **dadurch gekennzeichnet, dass** nach einer Verfahrensvariante (i) Komponente (A) und (B) sowie gegebenenfalls weitere Komponenten (D) bis (F) mit organischem Lösemittel (C) in beliebiger Reihenfolge und den gewünschten Mengenverhältnissen unter Durchmischung vermischt werden.

8. Verfahren zur Herstellung der Zusammensetzungen gemäß einem oder mehreren der Ansprüche 1 bis 6, **dadurch gekennzeichnet, dass** nach einer Verfahrensvariante (ii) die Komponenten (A), (B) sowie gegebenenfalls (D), (E) und (F) miteinander vermischt werden, wobei hierzu alle bisher gekannten Mischer, Kneter oder Extruder verwendet werden können.

9. Verfahren nach Anspruch 7, **dadurch gekennzeichnet, dass** Komponente (A) in situ hergestellt wird (Variante (ia)).

10. Verfahren nach Anspruch 7, **dadurch gekennzeichnet, dass** Komponente (B) in situ hergestellt wird (Variante (ib)).

## Claims

1. Compositions comprising
(A) copolymers of the general formula (1) 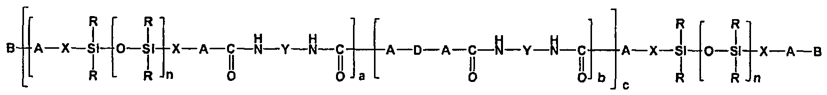 and
(B) compound of the general formula (2) 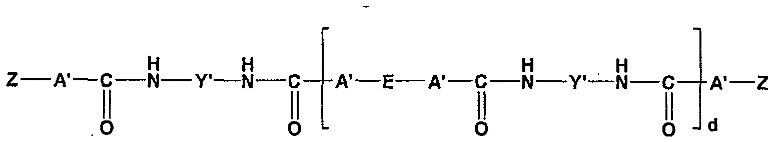 in which
**R** may be the same or different and is a hydrogen atom or a monovalent SiC-bonded, optionally substituted hydrocarbyl radical,
**Y** may be the same or different and represents divalent, optionally substituted hydrocarbyl radicals,
**X** may be the same or different and represents divalent SiC-bonded, optionally substituted hydrocarbyl radicals which may be interrupted by oxygen atoms,
**A** may be the same or different and is an oxygen atom, sulfur atom or amino group -NR¹-,
**R¹** may be the same or different and is a hydrogen atom or an optionally substituted hydrocarbyl radical,
**D** may be the same or different and represents an alkylene radical which is optionally substituted by a halogen atom, C₁-C₆-alkyl or C₁-C₆-alkyl ester and has 1 to 700 carbon atoms, in which mutually nonadjacent methylene units may be replaced by -O-, -COO-, -OCO- or -OCOO- groups,
**B** may be the same or different and represents a hydrogen atom, an OCN-Y-NH-CO- radical, an H₂N-Y-NH-CO- radical, an R²-A-CO-NH-Y-NH-CO- radical or an R₃Si-(O-SiR2)ₙ-X-A-CO-NH-Y-NH-CO- radical,
**R²** may be the same or different and is a monovalent, optionally silyl-substituted hydrocarbyl radical,
**A'** may be the same or different and has a definition given for A,
**Z** may be the same or different and represents a monovalent, optionally substituted hydrocarbyl radical or a monovalent organosilicon radical,
**Y'** may be the same or different and has a definition given for Y,
**E** may be the same or different and represents a divalent, optionally substituted hydrocarbyl radical,
**n** is an integer from 1 to 4000,
**a** is an integer of at least 1,
**b** is an integer from 0 to 40,
**c** is an integer of at least 1 and
**d** is an integer from 0 to 5,
with the proviso that, in compound of the formula (1), the a molecule blocks and b molecule blocks may be randomly distributed in the polymer.

2. Compositions according to Claim 1, **characterized in that** b is 0.

3. Compositions according to Claim 1 or 2, **characterized in that** d is 0.

4. Compositions according to one or more of Claims 1 to 3, **characterized in that** compounds of the formula (2) have a molecular weight of up to 5000.

5. Compositions according to one or more of Claims 1 to 4, **characterized in that** component (B) is present in amounts of 0.1 to 40 parts by weight, based on 100 parts by weight of component (A).

6. Compositions according to one or more of Claims 1 to 5, **characterized in that**, in addition to components (A) and (B), they may also comprise further constituents such as organic solvents (C), UV stabilizers (D), antioxidants (E) and fillers (F).

7. Process for producing the compositions according to one or more of Claims 1 to 6, **characterized in that**, according to a process variant (i), components (A) and (B) and optionally further components (D) to (F) are mixed thoroughly with organic solvent (C) in any sequence and the desired ratios.

8. Process for producing the compositions according to one or more of Claims 1 to 6, **characterized in that**, according to a process variant (ii), components (A), (B) and optionally (D), (E) and (F) are mixed with one another, for which all mixers, kneaders or extruders known to date can be used.

9. Process according to Claim 7, **characterized in that** component (A) is prepared in situ (variant (ia)).

10. Process according to Claim 7, **characterized in that** component (B) is prepared in situ (variant (ib)).

## Revendications

1. Compositions contenant
(A) des copolymères de formule générale (1) 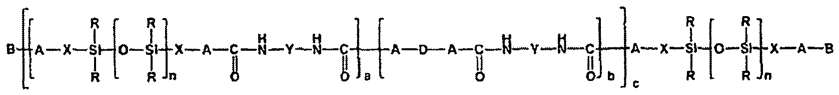 et
(B) un composé de formule générale (2) 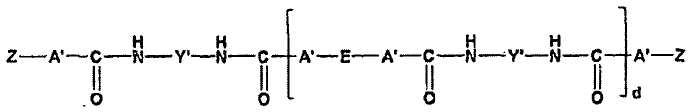 dans lesquelles
les R peuvent être identiques ou différents et signifient un atome d'hydrogène ou un radical hydrocarboné monovalent, relié à SiC, éventuellement substitué,
les Y peuvent être identiques ou différents et représentent des radicaux hydrocarbonés bivalents, éventuellement substitués,
les X peuvent être identiques ou différents et représentent des radicaux hydrocarbonés bivalents, reliés à SiC, éventuellement substitués, qui peuvent être interrompus par des atomes d'oxygène,
les A peuvent être identiques ou différents et signifient un atome d'oxygène, un atome de soufre ou un groupe amino -NR¹-,
les R¹ peuvent être identiques ou différents et signifient un atome d'hydrogène ou un radical hydrocarboné éventuellement substitué,
les D peuvent être identiques ou différents et représentent un radical alkylène de 1 à 700 atomes de carbone, éventuellement substitué par un atome d'halogène, un alkyle en C₁-C₆ ou un ester alkylique en C₁-C₆, dans lequel des unités méthylène non voisines les unes des autres peuvent être remplacées par des groupes -O-, -COO-, -OCO- ou -OCOO-,
les B peuvent être identiques ou différents et représentent un atome d'hydrogène, un radical OCN-Y-NH-CO-, un radical H₂N-Y-NH-CO-, un radical R²-A-CO-NH-Y-NH-CO- ou un radical R₃Si-(O-SiR₂)ₙ-X-A-CO-NH-Y-NH-CO-, les R² peuvent être identiques ou différents et signifient un radical hydrocarboné monovalent, éventuellement à substitution silyle,
les A' peuvent être identiques ou différents et ont une signification indiquée pour A,
les Z peuvent être identiques ou différents et représentent un radical hydrocarboné monovalent, éventuellement substitué, ou un radical organique de silicium monovalent,
les Y' peuvent être identiques ou différents et ont une signification indiquée pour Y,
les E peuvent être identiques ou différents et représentent un radical hydrocarboné bivalent, éventuellement substitué,
n est un nombre entier de 1 à 4 000,
a est un nombre entier d'au moins 1,
b est un nombre entier de 0 à 40,
c est un nombre entier d'au moins 1 et
d est un nombre entier de 0 à 5,
à condition que les a séquences moléculaires et les b séquences moléculaires dans le polymère puissent être réparties statistiquement dans le composé de formule (1).

2. Compositions selon la revendication 1, **caractérisées en ce que** b vaut 0.

3. Compositions selon la revendication 1 ou 2, **caractérisées en ce que** d vaut 0.

4. Compositions selon une ou plusieurs des revendications 1 à 3, **caractérisées en ce que** les composés de formule (2) ont un poids moléculaire de jusqu'à 5 000.

5. Compositions selon une ou plusieurs des revendications 1 à 4, **caractérisées en ce que** le composant (B) est contenu en quantités de 0,1 à 40 parties en poids, par rapport à 100 parties en poids du composant (A).

6. Compositions selon une ou plusieurs des revendications 1 à 5, **caractérisées en ce qu'**elles peuvent contenir en plus des composants (A) et (B) également des constituants supplémentaires, tels que des solvants organiques (C), des stabilisateurs UV (D), des antioxydants (E) et des charges (F).

7. Procédé de fabrication des compositions selon une ou plusieurs des revendications 1 à 6, **caractérisé en ce que**, selon une variante de procédé (i), les composants (A) et (B), ainsi qu'éventuellement les composants supplémentaires (D) à (F), sont mélangés avec le solvant organique (C) dans un ordre quelconque et selon les proportions souhaitées par mélange.

8. Procédé de fabrication des compositions selon une ou plusieurs des revendications 1 à 6, **caractérisé en ce que**, selon une variante de procédé (ii), les composants (A), (B) et éventuellement (D), (E) et (F) sont mélangés les uns avec les autres, tous les mélangeurs, tous les malaxeurs ou toutes les extrudeuses connus jusqu'à présent pouvant être utilisés pour cela.

9. Procédé selon la revendication 7, **caractérisé en ce que** le composant (A) est fabriqué in situ (variante (ia)).

10. Procédé selon la revendication 7, **caractérisé en ce que** le composant (B) est fabriqué in situ (variante (ib)).
